(19) Europäisches Patentamt
European Patent Office
Office européen des brevets

(11) **EP 2 762 920 B1**

(12) **EUROPÄISCHE PATENTSCHRIFT**

(45) Veröffentlichungstag und Bekanntmachung des Hinweises auf die Patenterteilung:
**06.05.2015 Patentblatt 2015/19**

(51) Int Cl.:
*G01S 17/10* (2006.01)          *G01S 17/42* (2006.01)
*G01S 7/486* (2006.01)          *G01S 7/292* (2006.01)
*G01S 7/487* (2006.01)

(21) Anmeldenummer: **13153219.4**

(22) Anmeldetag: **30.01.2013**

(54) **Verfahren zur Bestimmung einer Signallaufzeit**

Method for determining a signal propagation time

Procédé de détermination du temps de propagation d'un signal

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.08.2014 Patentblatt 2014/32**

(73) Patentinhaber: **SICK AG**
**79183 Waldkirch (DE)**

(72) Erfinder: **Weber, Thomas**
**77960 Seelbach (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:

- **MARCO F DUARTE ET AL: "Structured Compressed Sensing: From Theory to Applications", IEEE TRANSACTIONS ON SIGNAL PROCESSING, IEEE SERVICE CENTER, NEW YORK, NY, US, Bd. 59, Nr. 9, 1. September 2011 (2011-09-01), Seiten 4053-4085, XP011371253, ISSN: 1053-587X, DOI: 10.1109/TSP. 2011.2161982**
- **RONEN TUR ET AL: "Innovation Rate Sampling of Pulse Streams With Application to Ultrasound Imaging", IEEE TRANSACTIONS ON SIGNAL PROCESSING, IEEE SERVICE CENTER, NEW YORK, NY, US, Bd. 59, Nr. 4, 1. April 2011 (2011-04-01), Seiten 1827-1842, XP011349843, ISSN: 1053-587X, DOI: 10.1109/TSP. 2011.2105480**
- **KUSUMA J ET AL: "Sampling with finite rate of innovation: Channel and timing estimation for UWB and GPS", NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS], IEEE OPERATIONS CENTER, PISCATAWAY, NJ, Bd. 5, 11. Mai 2003 (2003-05-11), Seiten 3540-3544, XP010643103, DOI: 10.1109/ICC.2003.1204112 ISBN: 978-0-7803-7802-5**
- **JUAN CASTORENA ET AL: "Compressive sampling of LIDAR: Full-waveforms as signals of finite rate of innovation", SIGNAL PROCESSING CONFERENCE (EUSIPCO), 2012 PROCEEDINGS OF THE 20TH EUROPEAN, IEEE, 27. August 2012 (2012-08-27), Seiten 984-988, XP032254427, ISBN: 978-1-4673-1068-0**

**Beschreibung**

Die Erfindung betrifft ein Verfahren zur Bestimmung einer Signallaufzeit nach dem Oberbegriff von Anspruch 1 sowie einen für dieses Verfahren ausgebildeten Sensor.

Zahlreiche Sensoren nutzen ein Signallaufzeitprinzip, bei dem das Zeitintervall zwischen Senden und Empfang eines Signals über die Signallaufzeit in eine Entfernung umgerechnet wird. Dabei werden so verschiedene Frequenzbereiche des elektromagnetischen Spektrums ausgenutzt wie Mikrowellen und Licht.

So beruht ein bekanntes Verfahren zur Füllstandsmessung darauf, ein elektromagnetisches Signal in den Behälter mit dem zu vermessenden Füllstand zu senden und das reflektierte Signal auszuwerten. Eine Möglichkeit ist, das Signal frei abzustrahlen, wie dies beim Radar geschieht. Wegen der unkontrollierten Wellenausbreitung wird häufig das Verfahren der Zeitbereichsreflektometrie (TDR, Time Domain Reflectometry) bevorzugt. Es basiert auf der Bestimmung von Laufzeiten eines Mikrowellensignals, um den Abstand einer Diskontinuität des Leitungswellenwiderstandes zu ermitteln. Der Unterschied zum Radar besteht darin, dass die elektromagnetischen Wellen nicht ins Freie abgestrahlt, sondern entlang eines Leiters geführt werden. Der Leiter ist als Monosonde oder Koaxialsonde ausgebildet, welche senkrecht oder schräg in den Tank eingeführt wird und möglichst dicht bis zum Boden reicht, um den vollen Messbereich abzudecken.

Bei einer TDR-Messung wird ein sehr kurzer elektrischer Sendeimpuls in den Leiter eingespeist und durchläuft ihn in Richtung des gegenüberliegenden Endes. Trifft der Impuls auf eine Störstelle, was gleichbedeutend mit einer Änderung des örtlichen Wellenwiderstands ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen. Ein wichtiges Beispiel einer Störstelle ist eine Grenzfläche, welche zwei räumliche Bereiche mit unterschiedlichen physikalischen oder chemischen Eigenschaften trennt, wie eine Grenzfläche zwischen zwei Medien.

Bei optoelektronischen Sensoren nach dem Prinzip des Lichtlaufzeitverfahrens wird bei einem Pulslaufzeitverfahren ein kurzer Lichtpuls ausgesendet und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Aufgrund von Augenschutzbedingungen sind die zuletzt genannten Phasenmodulationsverfahren gerade bei gering remittierenden Targets wegen der erforderlichen großen Integrationszeiten weniger geeignet. Beim Pulsverfahren lässt sich die integrale Leistung dahingehend gewinnbringend nutzen, dass kurze Pulse mit hoher Energiedichte gesendet werden können und das Signal-Rauschverhältnis somit für den Einzelschuss verbessert wird.

Optoelektronische Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird. Das Lichtlaufzeitverfahren ist auch das Prinzip, nach dem entfernungsmessende Laserscanner arbeiten, deren Fahrstrahl eine Linie oder sogar eine Fläche ausmisst.

Um jeweils den Empfangszeitpunkt des reflektierten Signals genau bestimmen zu können, wird dessen Verlauf abgetastet und einer digitalen Auswertung zugeführt. Dabei werden beispielsweise lokale Extremstellen im Signalverlauf gesucht und deren zeitliche Lage einer Reflexion an einem Objekt oder einer Grenzfläche zugeordnet. Soll hierbei die Entfernungsmessung eine Genauigkeit im Bereich einiger zehn Millimeter erreichen, so muss die Signallaufzeit in einer Größenordnung von hundert Pikosekunden genau bestimmt werden. Um eine Distanzauflösung von einem Millimeter zu erreichen, müssen sechs Pikosekunden messtechnisch erfasst werden. Eine derartige Präzision verlangt nicht nur ausgeklügelte Auswertungsverfahren, sondern setzt zunächst einmal voraus, dass das Signal überhaupt hochauflösend genug erfasst und digitalisiert wurde.

Die bekannte hinreichende Voraussetzung für die Erfassung eines Eingangssignals nach dem Shannon-Nyquist-Theorem besagt, dass durch eine Abtastung kein Verlust an Information auftritt und das ursprüngliche Signal aus den digitalen Abtastpunkten komplett rekonstruiert werden kann, wenn die Abtastrate oberhalb dem Doppelten der maximal enthaltenen Signalfrequenz liegt. Wählt man einen A/D-Wandler nach diesem Kriterium, um extrem kurze Pulse zu erfassen, so zeigt sich sofort ein erhebliches Problem. Da eine Entfernungsauflösung von 150 mm einer zeitlichen Auflösung von 1 ns und damit bereits einer Abtastrate von 1 GHz entspricht, werden A/D-Wandler, welche die zeitlichen Anforderungen für eine Millimeterauflösung mitbringen, zumindest in absehbarer Zukunft nicht verfügbar sein. Dies gilt erst recht dann, wenn man die Herstellkosten im Blick hat, die nur den Einsatz vergleichsweise kostengünstiger Bausteine erlauben.

In der Signalverarbeitung gibt es unter dem Stichwort "Compressive Sensing" Ansätze, wie aus einer Teilerfassung eines Signals das gesamte Signal unter vollständigem Erhalt der Information rekonstruiert werden kann. Diese Verfahren werden in der Literatur theoretisch betrachtet und werden für die praktische Distanzmessung in Sensoren nach dem Signallaufzeitprinzip nicht eingesetzt. Es zeigen sich auch praktische Schwierigkeiten, wenn ein von einem realen Empfänger erfasstes analoges Signal verarbeitet werden soll, welche im Stand der Technik nicht diskutiert und folglich nicht gelöst werden.

Als kurze Einführung in Compressive Sensing sei ein eindimensionales Signal $x[i]$, $i = 1..N$ betrachtet, welches zeitdiskret ist, reelle Werte annimmt und durch einen Spaltenvektor der Dimension $N$ dargestellt wird. Diese vertraute Darstellung enthält implizit eine diskrete Basis für den Zeitbereich. Allgemein kann das Signal aber auch in jeder anderen Basis $\Psi$ über $x = \Psi s$ dargestellt werden, wobei $s$ das Signal zu Basis $\Psi$ und $\Psi$ eine $N \times N$-Matrix ist. Ein bekanntes Beispiel für einen Basiswechsel ist die Fouriertransformation, die den Zeitbereich mit dem Frequenzbereich verknüpft.

Viele reale Signale $x[i]$ nutzen nicht alle $N$ verfügbaren Freiheitsgrade aus, haben also nur $K < N$ Werte ungleich Null. Der Anteil an Nullen ist regelmäßig sogar erheblich. Diese Eigenschaft wird in der Mathematik als dünne Besetzung (sparsity, Spärlichkeit) bezeichnet. Ein spärlich besetztes Signal kann ohne Informationsverlust auf die Länge $K$ komprimiert werden. Compressive Sensing basiert nun einerseits darauf, dass eine dünne Besetzung nicht im Zeitbereich vorhanden sein muss, sondern auch zu einer beliebigen Basis $\Psi$ gegeben sein kann. Andererseits wird im Gegensatz zu herkömmlichen Kompressionsverfahren nicht zuerst das Signal mit all seiner Redundanz aufgezeichnet und anschließend komprimiert, sondern direkt das komprimierte Signal erfasst.

Ein sehr anschauliches Beispiel liefert die Betrachtung eines Sinussignals, das im Zeitbereich nicht dünn besetzt ist, im Frequenzbereich jedoch durch einen einzigen Parameter beschrieben ist. Hier wäre also $\Psi$ die Fourierbasis, mit deren Hilfe die dünne Besetzung erreicht wird und mit deren Hilfe es genügt, nur den einen Frequenzparameter zu bestimmen, um das gesamte Signal zu rekonstruieren.

Führt man eine Messmatrix $\Phi$ ein, so entsteht das erfasste Signal $y$ aus dem ursprünglichen Signal durch Matrixmultiplikation. Zu einer beliebigen Basis lässt sich dann der Vorgang der Signalerfassung in einem linearen Gleichungssystem $y = \Phi x = \Phi \Psi s$ zusammenfassen. Compressive Sensing muss nun vor allem zwei Herausforderungen lösen:

Es gilt zunächst, eine geeignete Messmatrix $\Phi$ anzugeben, die für alle in Frage kommenden dünn besetzten Signale $x$ geeignet ist. Eine Wahl der Messmatrix $\Phi$ basiert auf einer Zufallsmatrix mit voneinander unabhängigen, normalverteilten Elementen. Die Messmatrix $\Phi$ sollte möglichst unkorreliert zum zu messenden Signal sein und in sich geringe lineare Abhängigkeiten zeigen, wofür sich jeweils mathematische Maße angeben lassen.

Außerdem muss ein Rekonstruktionsalgorithmus gefunden werden, denn das angegebene lineare Gleichungssystem ist unterbestimmt und damit nicht direkt lösbar, solange $y$ eine Dimension $M < N$ aufweist, was ja Sinn des ganzen Verfahrens ist. Die Stellen, an denen das Signal $x$ nichtverschwindende Anteile hat, sind dabei unbekannt. Vorausgesetzt werden darf nur, dass es $K \leq M$ Werte ungleich Null enthält.

Es gibt Verfahren wie die Pseudoinverse beziehungsweise Moore-Penrose-Inverse, um auch ein unterbestimmtes lineares Gleichungssystem zu lösen. Allgemein wird hierzu eine Norm des Restfehlers minimiert, wobei die verbreitetste Norm die $L_2$-Norm zur Minimierung des quadratischen Fehlers ist. Im Zusammenhang mit Compressive Sensing führen diese Verfahren in aller Regel nicht zum Ziel, weil die Minimierung nicht auf den Erhalt der dünnen Besetzung achtet. Geht die dünne Besetzung verloren, ist die Lösung aber unbrauchbar.

Im Gegensatz zu der $L_2$-Norm zählt die $L_0$-Norm gerade die von Null verschiedenen Werte, so dass deren Minimierung die angestrebte dünne Besetzung verspricht. Unglücklicherweise sind Optimierungsverfahren der $L_0$-Norm instabil und zudem noch lediglich NP-vollständig. Die Optimierung der $L_1$-Norm dagegen erhält etwas überraschend die dünne Besetzung und stellt dabei noch ein konvexes Optimierungsproblem, d.h. ein gefundenes Optimum ist automatisch auch das globale Optimum. Über den Simplex-Algorithmus steht hier ein geeignetes Verfahren zur Verfügung. Dennoch sind alle diese Verfahren aufwändig und liefern in einer realen Signallaufzeitmessung keine befriedigenden Ergebnisse.

Mit der theoretischen Rekonstruktion von Eingangssignalen im Rahmen von Compressive Sensing befassen sich beispielsweise die Arbeiten von Vetterli et al., "Sampling Signals With Finite Rate of Innovation", IEEE Transactions on Signal Processing, Vol. 50(6), Juni 2002, Seiten 1417-1428 oder von Hormati et al., "Annihilating filter-based decoding in the compressed sensing frameword", Proceedings of SPIE Vol. 6701, Wavelets XII, August 26, 2007, San Diego, CA, USA, Seiten 670121-1-670121-10, XP55023298, ISSN 0277-768X. Dabei geht es um bestimmte Klassen von Eingangssignalen, die sich durch eine endliche Zahl von Freiheitsgraden auszeichnen und die mit Hilfe eines sogenannten Auslöschungsfilters (Annihilation filter) rekonstruiert werden. Die Anwendung derartiger Verfahren für die Telekommunikation wird in der US 8 213 554 B2 oder der US 8 326 580 B2 beschrieben. Für Signallaufzeitmessungen dagegen wurde das Verfahren nicht angewandt, und die besonderen praktischen Schwierigkeiten in diesem Zusammenhang werden nicht diskutiert.

Die Arbeit von M. Duarte et al., "Structured Compressive Sensing: From Theory to Applications", IEEE Transactions on Signal Processing, IEEE Service Center, New York, NY, US, Bd. 59 (9), 1. September 2011, Seiten 4053-4085 ist ein Übersichtsartikel, der sich unter anderem mit der Signalrekonstruktion durch Methoden des Compressive Sensing bei Radaranwendungen befasst.

Völlig unabhängig von Compressive Sensing ist im Stand der Technik bekannt, dass die erfassten Signale wegen verschiedener Störeinflüsse häufig nicht mehr ohne Weiteres ausgewertet werden können. Deshalb werden in manchen Fällen bei der optischen Entfernungsmessung Mehrfachmessungen ausgeführt und statistisch ausgewertet. Als ein Beispiel sei hierzu die EP 1 972 961 A1 genannt. In deren Zusammenhang hilft aber die Mehrfachmessung nicht, die physische Auflösungsbegrenzung durch den A/D-Wandler zu mildern, sondern dient dazu, ein ausreichendes Signal-Rausch-Verhältnis zu erreichen. Die von dem A/D-Wandler vorgegebene Auflösungsbegrenzung wird dabei durch phasenversetzte Abtastung noch etwas erhöht, ansonsten aber hingenommen und durch eine Auswertung überwunden, die auf der Feineinstellung von Sendeverzögerungen basiert.

Es ist daher Aufgabe der Erfindung, eine verbesserte Signalerfassung für die Signallaufzeitmessung anzugeben.

Diese Aufgabe wird durch ein Verfahren zur Bestimmung einer Signallaufzeit nach Anspruch 1 sowie einen für dieses Verfahren ausgebildeten Sensor gelöst. Dabei geht die Erfindung von dem Grundgedanken aus, die dünne Besetzung (sparsity) des Eingangssignals bei der Signallaufzeitmessung auszunutzen, um das Eingangssignal mit einer geringeren Auflösung zu digitalisieren als an sich für die angestrebte effektive Auflösung erforderlich. Es wird deshalb nur ein Rohsignal mit der geringeren Auflösung digitalisiert und anschließend das Eingangssignal mit Verfahren des Compressive Sensing rekonstruiert. Diese Rekonstruktion kann explizit sein, woraufhin das rekonstruierte Signal in der effektiven Auflösung vorliegt. Es ist aber auch möglich, dass die Rekonstruktion nur implizit durchgeführt wird. In diesem Fall werden schon im Rahmen einer nur teilweisen Rekonstruktion oder mit Verfahren, wie sie auch für eine Rekonstruktion berechnet würden, die jeweils gesuchten Ausgangsgrößen gefunden, ohne dass irgendwo ein vollständiges rekonstruiertes Signal abgespeichert wird.

Hierbei entspricht die Auflösung dem zeitlichen Abstand jeweils zweier diskreter Werte des Rohsignals beziehungsweise des Eingangssignals, nicht etwa der Bitbreite der Digitalisierung, wobei Auflösung so verstanden sein soll, dass die derart aufgelöste Signalinformation tatsächlich dem realen Signal entspricht. Im Gegensatz dazu stünde beispielsweise eine Interpolation, mit der zwar die nominellen zeitlichen Abstände der Signalwerte verringert werden, jedoch die Zwischenwerte lediglich auf Annahmen und nicht auf Messinformationen beruhen.

Da das Eingangssignal nicht unbedingt im Zeitbereich dünn besetzt ist, beruht die Rekonstruktion auf einer Repräsentation, also einem Satz von Basisfunktionen, in dem das Eingangssignal dünn besetzt darstellbar ist. Damit kann die Abtastrate deutlich kleiner gewählt werden, als es durch das Shannon-Nyquist-Kriterium gefordert wird. Theoretisch geht dabei gar keine Messinformation verloren, weil das Eingangssignal vollständig rekonstruiert wird. Praktisch wird zumindest eine erhebliche Reduktion der Abtastrate ohne nennenswerte Auswirkung auf den Messfehler erreicht. Die Abtastrate bei der Digitalisierung kann um einen Faktor 2 bis hundert oder sogar noch mehr geringer sein als die effektive Abtastung nach Rekonstruktion. Beispielsweise wird mit einigen hundert MHz abgetastet und ein Eingangssignal mit effektiver Auflösung von oberhalb 10 GHz rekonstruiert. Für diese effektive Auflösung stünden derzeit bei einigermaßen hoher Bitbreite gar keine, erst recht keine kostengünstigen A/D-Wandler zur Verfügung.

In dem hochaufgelöst rekonstruierten Eingangssignal wird dann der Empfangszeitpunkt bestimmt. Dazu wird beispielsweise nach Signalabschnitten gesucht, die von dem Sendesignal verursacht sind, insbesondere nach Reflexionspulsen. Wie noch erläutert wird, können in einigen vorteilhaften Ausführungsformen der Empfangszeitpunkt oder zumindest Kandidaten für den Empfangszeitpunkt sogar schon bei der Rekonstruktion mit abfallen, so dass eine weitere Auswertung entfällt oder sich zumindest erheblich vereinfacht. Die Messung beinhaltet möglicherweise eine Wandlung des Signals, beispielsweise mittels Lichtsender und Lichtempfänger von elektronisch nach optisch und zurück, die bei Messungen mit Radar oder Mikrowelle entfallen kann.

Die Erfindung hat den Vorteil, dass eine hochaufgelöste Erfassung eines Eingangssignals mit einem vergleichsweise langsamen A/D-Wandler ermöglicht wird, der an sich den Messanforderungen nicht entspricht. Dies bedeutet, dass Eingangssignale der digitalen Auswertung zugänglich werden, die mit derzeitiger Hardware nicht erfassbar sind, oder für die zwar entsprechende schnelle A/D-Wandler erhältlich, jedoch in Anbetracht der Herstellkosten praktisch nicht verwendbar wären.

Vorzugsweise wird für die Repräsentation angenommen, dass das Eingangssignal dünn besetzt ist oder eine endliche Zahl von Freiheitsgraden aufweist. Die Voraussetzung der dünnen Besetzung korrespondiert mit einer endlichen Anzahl von Freiheitsgraden oder Änderungen (FRI, Finite Rate of Innovation) zu einer geeigneten Basis. Für ein Signallaufzeitverfahren kommt hier insbesondere eine Darstellung als Überlagerung einer endlichen Anzahl von Pulsen in Frage, wobei jeder Puls durch eine Amplitude und eine zeitliche Lage charakterisiert ist. Es genügen also für eine Überlagerung von $K$ Pulsen $2K$ Freiheitsgrade, um das Eingangssignal vollständig zu erfassen. Dieses Limit wird allerdings nur theoretisch und selten durch reale, von Störeffekten überlagerte Eingangssignale erreicht. Da im Voraus nicht bekannt ist, wie viele Pulse sich überlagern, kann die Rekonstruktion mit einem relativ hohen Wert für $K$ gestartet werden und das $K$ dann verringert werden, solange die Qualität der Rekonstruktion zumindest annähernd erhalten bleibt. Ein Vorteil der Rekonstruktion auf Basis von Pulsen ist, dass wesentliche Teile der Auswertung schon mit der Rekonstruktion erledigt sind, denn man kennt anschließend Lage und Höhe der Pulse und damit die Kandidaten für die gesuchte Signallaufzeit. Statt einer vollständigen Auswertung kann es dann genügen, den gesuchten Puls durch Plausibilitätsüberlegungen zu finden, etwa indem die kleinsten Pulse oder Pulse außerhalb eines Messbereichs als Störungen eliminiert werden oder indem mit dem höchsten oder dem ersten Puls weitergearbeitet wird

Für die Rekonstruktion wird vorzugsweise ein Auslöschungsfilter bestimmt, welches das Eingangssignal eliminiert. Hieraus ergibt sich ein lineares Gleichungssystem, das mit entsprechenden Verfahren gelöst werden kann. Dabei wird selbstverständlich eine nichttriviale Lösung ungleich Null gesucht.

Die Bestimmung des Auslöschungsfilters weist bevorzugt die Auflösung eines linearen Gleichungssystems mit einer Toeplitz-Matrix auf, die mit Werten der Fouriertransformierten des Eingangssignals besetzt ist. Dies ist eine besondere Darstellung des Eingangssignals, in welcher das lineare Gleichungssystem eine besondere Struktur aufweist, nämlich die Toeplitz-Struktur, bei der die Diagonale und alle Nebendiagonalen der Matrix jeweils in sich den gleichen Wert aufweisen. Diese Struktur beschleunigt mit entsprechend angepassten Verfahren die Lösung des linearen Gleichungssystems. Alternativ zu einem Auslöschungsfilter wäre auch eine Optimierung wie die eingangs erläuterte $L_1$-Minimierung oder die Prony-Methode denkbar.

Für die Bestimmung des Auslöschungsfilters bei verrauschtem Eingangssignal wird bevorzugt vor der Auflösung des linearen Gleichungssystems die Toeplitz-Eigenschaft durch eine iterative Optimierung, insbesondere den Cadzow-Algorithmus, wiederhergestellt. Störeffekte auf dem Eingangssignal führen in der Regel dazu, dass die Toeplitz-Eigenschaft verloren geht. Es gibt dann Algorithmen wie den Cadzow-Algorithmus, die eine minimal beabstandete Matrix auffinden, welche diese Toeplitz-Eigenschaft aufweist. Alternativ oder ergänzend kann ein TLS-Verfahren (total least squares) eingesetzt werden, welches eine Matrix sucht, die das rauschbehaftete Signal nicht ganz, sondern nur möglichst vollständig auslöscht.

Die iterative Optimierung verwendet vorzugsweise als Anfangswert die Toeplitz-Matrix mindestens einer früheren Rekonstruktion. Die soeben genannten Verfahren arbeiten iterativ und konvergieren deshalb mit guten Anfangswerten schneller oder führen, bei Vorgabe einer konstanten Iterationszahl statt eines Restfehlers, zu einem besseren Ergebnis. Bei Signallaufzeitmessungen kann man meist davon ausgehen, dass sich bei einer Wiederholungsmessung die Verhältnisse nur geringfügig geändert haben. Eine zuvor gefundene Toeplitz-Matrix stellt deshalb einen wesentlich besseren Anfangswert dar als generische Initialwerte. Falls die Annahme quasistationärer Messbedingungen durch raschen Richtungswechsel verletzt ist, wie etwa im Falle eines Laserscanners, können Anfangswerte für die iterative Optimierung auch richtungsabhängig gespeichert werden, um bei einer künftigen Messung in diese jeweilige Richtung darauf zuzugreifen.

Das Eingangssignal wird bevorzugt vor der Abtastung abgeschnitten oder logarithmisch verstärkt. Es findet also schon im analogen Pfad eine Signalaufbereitung statt, um Übersteuerungen entgegenzuwirken. Eine weitere bevorzugte analoge Signalaufbereitung besteht darin, das Eingangssignal vor der Abtastung gezielt zu verrauschen. Ähnlich wie unter dem Stichwort "Dithering" ausführlich im Stand der Technik diskutiert, können gezielt eingeführte Rauschanteile eine Messung verbessern, in diesem Fall vor allem Quantisierungseffekte verringern.

Das Rohsignal wird bevorzugt vor der Rekonstruktion digital aufbereitet, so dass die Eigenschaft des Eingangssignals, dass es dünn besetzt ist oder eine endliche Anzahl von Freiheitsgraden aufweist, auch unter auf das Eingangssignal einwirkenden Störeinflüssen erhalten bleibt. Verschiedene Störeffekte, wie ein Burst oder ein Dauerstörer fester Frequenz, können die dünne Besetzung des Signals zerstören und damit auch die erfolgreiche Rekonstruktion verhindern. Man kann die Signale dann nicht einfach mit bekannten Filtern bearbeiten, beispielsweise durch Glättung. Diese Filter wirken üblicherweise im Zeitbereich oder im Frequenzbereich und beachten daher Eigenschaften in der unbekannten Basis der Rekonstruktion nicht. Man muss vielmehr Signalaufbereitungen mit einer Berücksichtigung der Rekonstruktion verwenden.

Vorzugsweise wird eine Mehrfachmessung ausgeführt, bei der jeweils ein Sendesignal ausgesandt und ein daraufhin reflektiertes Eingangssignal aus dem Überwachungsbereich empfangen wird, wobei durch eine gemeinsame Bewertung aus der dabei durch Abtastung gewonnnen Vielzahl von Rohsignalen das digital aufbereitete Rohsignal gewonnen wird. Dieses Verfahren beruht auf der Erkenntnis, dass häufig auf der digitalen Ebene die Voraussetzungen für eine erfolgreiche Rekonstruktion nicht mehr nachträglich hergestellt werden können. Es ist stattdessen erforderlich, auch unter Störeinflüssen bereits ein Rohsignal mit der gewünschten dünnen Besetzung zu gewinnen. Dies geschieht durch eine gemeinsame Bewertung einer Mehrfachmessung, etwa einer Scharmittelung, einer Maximum-Likelihood-Schätzung oder einen Kalman-Filter, welcher die Signalwerte über die Messwiederholungen verfolgt. Eine im Stand der Technik übliche Scharmittelung erst auf der Ebene des auszuwertenden Eingangssignals, welches hier dem rekonstruierten Signal entspricht, führt dagegen nicht zum Ziel, denn die Streuungen sind insbesondere bei Quantisierungsfehlern, auf die das System besonders empfindlich reagiert, nicht mittelwerttreu.

Die Sendesignale werden bevorzugt mit unterschiedlichen Verzögerungen ausgesandt, und für die gemeinsame Bewertung wird eine Scharmittelung unter Berücksichtigung der Verzögerungen durchgeführt. Ohne ein derartiges Zeitsprungverfahren hilft nämlich die Mittelung nicht gegen einen phasengleichen Störer. Durch die unterschiedlichen Verzögerungen wird ein Zufallselement eingeführt, welches dafür sorgt, dass der Störeinfluss sich mit den Wiederholungen reduziert, während das Messsignal erhalten bleibt und damit im Verhältnis zum Störer anwächst.

Das Eingangssignal wird bevorzugt vor der Abtastung in einem Filter gefiltert, um die Signalform zeitlich zu strecken, insbesondere mittels eines Tiefpassfilters. Das Filter entspricht hier dem bei Compressive Sensing üblichen Konstrukt des sogenannten "sampling kernels". Es sorgt für eine Streckung des Eingangssignals, damit dessen Informationen auch mit geringerer Abtastrate erfassbar werden. Die Impulsantwort des Filters ist bekannt oder wird ausgemessen, um diese Information bei der Rekonstruktion zu verwenden. Solange die Impulsantwort groß gegen die Breite der Sendepulse ist, spielt die Form der Sendepulse für die Rekonstruktion keine Rolle, weil die Antwort auf solche Sendepulse praktisch immer noch die Impulsantwort ist. Alternativ zu der Verwendung eines Filters ist auch daran zu denken, direkt entsprechend breite Sendepulse auszusenden. Für die Rekonstruktion ist nicht unterscheidbar, ob die Pulse schon an der Quelle oder erst nach Befilterung im Empfangspfad breit sind. Auf diese Weise kann ein Bauteil eingespart werden.

Die Übertragungsfunktion des Filters wird bevorzugt zur Kalibrierung oder Rekalibrierung vermessen. Dies kann anfänglich, aber auch später zur Kompensation von Driften geschehen. Die Übertragungsfunktion ist eine Eingangsgröße der Rekonstruktion und sollte daher genau bekannt sein und bleiben. Da eine Kalibrierung oder Rekalibrierung anders als die Messung selbst unter keinen Echtzeitanforderungen steht, kann eine große Anzahl von Wiederholungen durchgeführt beziehungsweise die Auflösung durch Maßnahmen wie unterschiedliche verzögerte Parallelabtastung (interleaving) oder Unterabtastung bei verschiedenen Sendeverzögerungen verbessert werden.

Die Abtastrate ist bevorzugt größer gewählt als zur Rekonstruktion des Eingangssignals erforderlich. Je nach Typ des Eingangssignals genügen bei dessen dünner Besetzung eine gewisse Anzahl Abtastungen zur vollständigen Rekonstruktion. Bei einer Überlagerung von $K$ Pulsen, die sich voneinander in zeitlicher Position und Amplitude unterscheiden, sind dies $2K$ Abtastungen. Diese mathematische Untergrenze wird nach dieser bevorzugten Ausführungsform zum Ausgleich diverser Störeinflüsse auf das Rohsignal nicht ausgereizt, sondern gegenüber der Untergrenze überabgetastet. Dabei bleibt die Anzahl der Abtastungen unterhalb der effektiven Auflösung, in der Regel sogar weiterhin um einen Faktor von 2 bis 100. Die Bandbreite des Filters zur Streckung der Signalform wird vorzugsweise an die erhöhte Abtastrate angepasst. Bei zu geringer Bandbreite bliebe ansonsten eine erhöhte Abtastrate ineffektiv, weil gar keine entsprechende hochfrequenten Signalinformationen vorhanden sind.

Die Erhöhung der Abtastrate beziehungsweise Bandbreitenanpassung des Filters ist besonders vorteilhaft für die Pulstrennung ineinanderlaufender Pulse. Darin liegt nämlich ein großer Vorteil der Rekonstruktion. Diese erkennt quasi als Abfallprodukt die Lage der Pulse unabhängig davon, ob die einzelnen Pulse überhaupt von herkömmlichen, nach lokalen Maxima suchenden Auswertungen im Zeitbereich erkannt würden. Eine erhöhte Abtastrate unterstützt die Rekonstruktion und Pulstrennung auch noch bei sehr dicht aneinanderliegenden Pulsen.

Eine Amplitudenablage des Rohsignals vor der Rekonstruktion wird vorzugsweise kompensiert, insbesondere indem ein konstanter Teilbereich des Rohsignals gesucht und das Rohsignal um dessen Amplitudenablage korrigiert wird. Für eine herkömmliche Auswertung ist ein derartiges konstantes Offset des Eingangssignals weniger kritisch, weil sich die zu erkennenden Pulse dennoch daraus abheben. Bei einer Rekonstruktion, sofern sie diese Voraussetzung nicht kennt und berücksichtigt, lässt sich kaum vorhersagen, welchen Einfluss ein amplitudenversetztes Signal hat, weil man dies in der a priori unbekannten Basis der Rekonstruktion bewerten müsste. Eine unerwünschte Amplitudenablage kann insbesondere durch eine Pegelanhebung vor der Digitalisierung entstehen, damit diese eingangsseitig mit einem unipolaren Signal arbeiten kann.

Das erfindungsgemäße Verfahren wird vorzugsweise in einem Sensor zur Abstandsmessung eingesetzt, insbesondere einem optischer Entfernungstaster, einem Laserscanner oder einem TDR-Füllstandssensor mit einem Sender, einem Empfänger, einem A/D-Wandler und einer Auswertungseinheit zur Durchführung der Signallaufzeitmessung und Rekonstruktion des Eingangssignals. Deren Messauflösung wird verbessert, wobei lediglich Auswertungskapazitäten benötigt und keine erhöhten Hardwareanforderungen gestellt werden. Bei einem TDR-Sensor wird nicht im klassischen Sinne ein Überwachungsbereich überwacht, sondern in diesem Zusammenhang wird der Behälter mit dem Medium als Überwachungsbereich aufgefasst, dessen Füllstand gemessen wird.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1    eine vereinfachte Blockdarstellung eines Messkerns für eine Signallaufzeitmessung;
Fig. 2    eine vereinfachte Blockdarstellung eines optischen Entfernungstasters;
Fig. 3    eine schematische Schnittansicht eines Laserscanners;
Fig. 4    eine schematische Schnittansicht eines TDR-Füllstandsensors;
Fig. 5    eine Blockdarstellung zur Erläuterung des FRI-Samplings;
Fig. 6    eine an die Schritte einer Rekonstruktion angelehnte schematische Darstellung eines Messkerns;
Fig. 7    ein beispielhaftes Eingangssignal eines TDR-Füllstandssensors und dessen Rekonstruktion;
Fig. 8    eine Darstellung der verschiedenen Ebenen der Signalerfassung zur Erläuterung von Angriffspunkten für Störkompensationen;
Fig. 9    eine Darstellung eines Signals mit überlagerten Pulsen und deren Rekonstruktion einschließlich Pulstrennung;
Fig. 10   eine Übersichtsdarstellung über das Gesamtsystem zur Signalrekonstruktion mit verschiedenen Maßnahmen zur Störkompensation;

Fig. 11    einen beispielhaften Algorithmus zur Bestimmung von Pulspositionen und Pulsamplituden im Rahmen der Rekonstruktion einschließlich analoger Vorbereitungsschritte in Pseudocode; und

Fig. 12    einen beispielhaften Algorithmus in Pseudocode, der die Rekonstruktion weiter detailliert und den Rechenaufwand abschätzt.

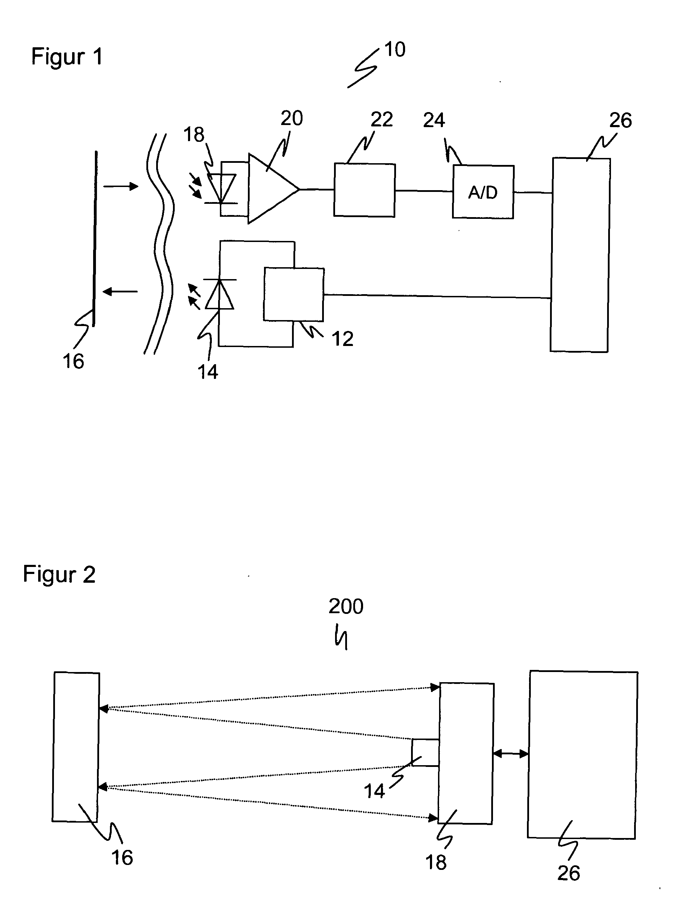

Figur 1 zeigt ein Blockschaltbild eines Messkerns 10 zur Bestimmung einer Entfernung nach einem Signallaufzeitprinzip. Beispiele für Sensoren, in denen der Messkern 10 eingesetzt wird, werden anschließend im Zusammenhang mit den Figuren 2-4 aufgeführt. Mittels einer Treiberschaltung 12 wird über einen Sender 14 ein elektromagnetisches Signal, hier dargestellt als Lichtpuls, ausgesandt und von einem Objekt 16 oder einer Grenzfläche zurückgeworfen. Das reflektierte Signal wird in einem Empfänger 18 registriert und in ein elektrisches Empfangssignal umgewandelt. Im Falle von Mikrowellen- oder Radarsignalen kann die Wandlung des elektromagnetischen Signals entfallen und der Sendepuls direkt abgestrahlt und nach Reflexion empfangen werden. Das Empfangssignal durchläuft eine analoge Vorverarbeitung, dargestellt beispielhaft mit einem Verstärker 20 und einem Filter 22, und wird dann in einem A/D-Wandler 24 digitalisiert.

Sender 12 und Empfänger 18 werden von einer Steuer- und Auswertungseinheit 26 angesteuert und ausgewertet, die auf einem digitalen Baustein implementiert ist, beispielsweise einem FPGA (Field Programmable Gate Array) 18, einem Mikrocontroller oder dergleichen. Die Steuer- und Auswertungseinheit 26 bestimmt den Sendezeitpunkt, zu dem der Sender 14 ein Sendesignal aussendet, und erhält das digitalisierte Signal des A/D-Wandlers zur weiteren Auswertung, um daraus den Empfangszeitpunkt des reflektierten Sendesignals in dem Empfänger 18 zu ermitteln. Aus dem Empfangszeitpunkt errechnet sich mit dem bekannten Sendezeitpunkt die Signallaufzeit, die wiederum über die Signalgeschwindigkeit, in den meisten Anwendungen die Vakuumlichtgeschwindigkeit, der Entfernung des Zielobjekts 16 entspricht.

Die Figuren 2 bis 4 zeigen nicht abschließend einige Sensoren, in denen der Messkern 10 einsetzbar ist. Dabei bezeichnen die gleichen Bezugszeichen wie in allen Figuren die gleichen oder zueinander analogen Merkmale. Einzelne Einheiten des Sende- und Empfangspfades, wie Filter 22 oder A/D-Wandler 24, sind hier der Übersichtlichkeit halber nicht gezeigt.

In Figur 2 ist ein eindimensionaler optoelektronischer Sensor 200 sehr vereinfacht dargestellt, wobei der Sender 14 als Lichtsender und der Empfänger 18 als Lichtempfänger ausgebildet ist. Der Lichtsender 14 verdeckt nur einen kleinen und unerheblichen Anteil des an einem Reflektor oder dem Zielobjekt 16 reflektierten Lichtstrahls, der sich auf seinem Weg aufweitet. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Der Sensor 200 kann ein optoelektronischer Taster oder Entfernungsmesser sein. Neben einer eigentlichen Entfernungsmessung, bei der ein Absolutwert für eine Entfernung zu einem Objekt 14 ermittelt wird, ist auch die Überwachung eines eingelernten Abstands, beispielsweise zu einem festen kooperativen Ziel 14, auf Änderungen des eingelernten Abstands denkbar. Eine weitere Ausführungsform ist eine Reflexionslichtschranke, also eine Lichtschranke mit einem Lichtsender und einem gegenüber angeordneten Reflektor, wobei eine Unterbrechung des dort reflektierten Strahls detektiert wird. Durch die Messung der Entfernung oder der Änderung der Entfernung dieses Reflektors kann überwacht werden, ob der Reflektor noch am erwarteten Ort steht. Alle genannten Sensoren können einen Entfernungswert ausgeben oder anzeigen oder auch als Schalter arbeiten, indem ein Schaltereignis bei Detektion eines Objekts in einer bestimmten Entfernung oder bei Abweichung von einer erwarteten Entfernung ausgelöst wird. Mehrere Sensoren 200 können kombiniert werden, um ein tastendes Lichtgitter mit mehreren, meist parallelen Strahlen zu bilden, welches in jedem Strahl Entfernungen misst oder überwacht. Auch mobile Systeme sind denkbar, bei denen der Sensor 200 beweglich montiert ist.

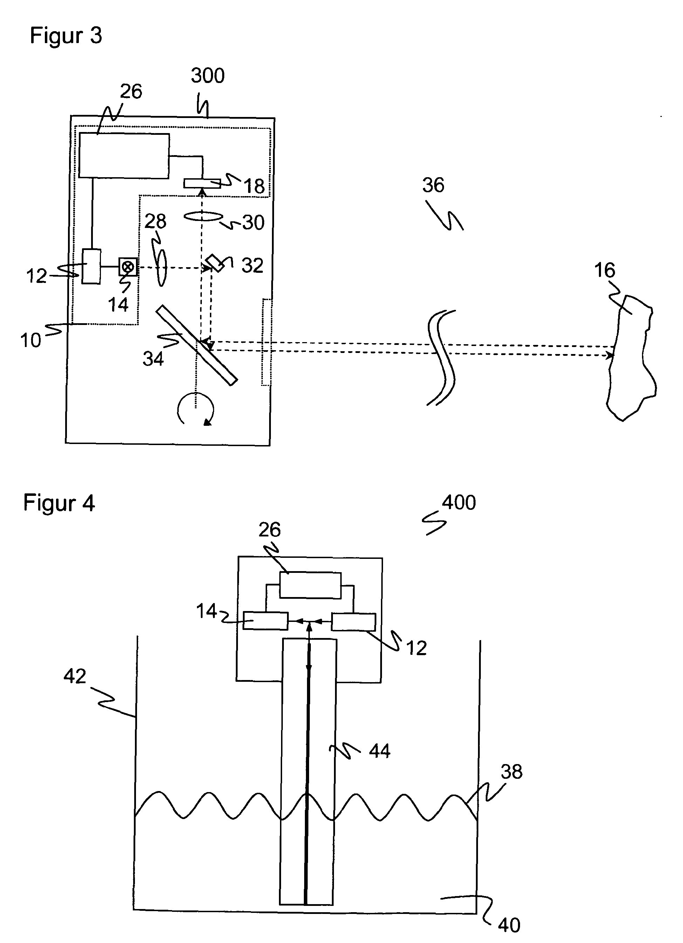

In Figur 3 ist ein Laserscanner 300 mit dem Messkern 10 dargestellt. Lichtsender 14 und Lichtempfänger 18 ist jeweils eine Optik 28, 30 zugeordnet, wobei derartige Optiken üblicherweise auch bei einem eindimensionalen Sensor 200 gemäß Figur 2 vorgesehen sind. Der Scanstrahl des Lichtsenders 14 wird über eine erste Ablenkeinheit 32 und eine zweite Ablenkeinheit 34 in einen Überwachungsbereich 36 gelenkt. Die beispielsweise als Spiegel ausgebildeten Ablenkeinheiten 32, 34 sind drehbar gelagert, so dass der Scanstrahl periodisch über eine Scanebene geführt wird. Dabei ist die drehbare Einheit mit den Ablenkeinheiten 32, 34 mit einem Encoder versehen, so dass die Winkellage stets bekannt ist. Die erste Ablenkeinheit 32 verdeckt nur einen vernachlässigbar kleinen Anteil des reflektierten Scanstrahls, der somit nahezu vollständig nach erneuter Ablenkung an der zweiten Ablenkeinheit 34 auf den Lichtempfänger 18 trifft und in dem Messkern 10 ausgewertet wird, um die Entfernung des Objekts 16 zu bestimmen. Auf diese Weise gewinnt der Laserscanner 300 anhand der Winkellage und der Abstände Entfernungsprofile in seiner Scanebene. Es sind abweichende Aufbauten von Laserscannern bekannt, beispielsweise mit einem drehbaren Spiegelpolygonrad oder einem insgesamt drehbaren Optikkopf, die von der Erfindung ebenfalls umfasst sind.

Figur 4 zeigt einen Füllstandssensor 400 nach dem TDR-Prinzip mit dem Messkern 10, der die Entfernung zu einer Grenzfläche 38 eines Mediums 40 und damit den Füllstand des Mediums 40 in einem Behälter 42 misst. Der Sender 14 ist hier als Mikrowellensender ausgeführt, dessen Mikrowellenpuls auf einer Sonde 44 zu der Grenzfläche 38 geführt und dort aufgrund der unterschiedlichen Dielektrizitätskonstante des umgebenden Mediums 40 zumindest teilweise reflektiert wird. Entsprechend ist der Empfänger 18 ein Mikrowellenempfänger, und der Empfangszeitpunkt von dessen Signal wird in dem Messkern 10 bestimmt. Die Sonde 44 ist in Figur 4 eine Koaxialsonde. Andere Sondenformen, beispielsweise eine Monosonde mit nur einem Leiter sind bekannt. Füllstandsmessungen werden auch nach dem Radarprinzip ohne Führung auf einer Sonde 44 durchgeführt. Alle derartigen Messungen sind von der Erfindung umfasst.

Erfindungsgemäß ist vorgesehen, dass der A/D-Wandler 24 das Eingangssignal mit einer Abtastrate unterhalb, vorzugsweise deutlich unterhalb der gewünschten zeitlichen Auflösung erfasst. Aus dem derart gewonnenen Rohsignal wird dann der Empfangszeitpunkt mit einem Verfahren gemäß Compressive Sensing rekonstruiert.

Eine bevorzugte Ausführungsform verwendet für diese Rekonstruktion ein sogenanntes Auslöschungsfilter (Annihilating Filter). Dieses Verfahren soll nun zunächst näher erläutert werden.

Es wird hierfür die Annahme getroffen, dass die zu rekonstruierenden Signale möglicherweise bei der Direktabtastung eine hohe Bandbreite erfordern würden, aber dennoch in einem endlichen Messfenster nur eine endliche, sogar nur relative kleine Anzahl von Freiheitsgraden aufweisen, d. h. der Informationsgehalt in dem Eingangssignal ist gering. Die Freiheitsgrade werden in der englischsprachigen Literatur auch als "innovations"' bezeichnet, woraus sich der Begriff FRI (Finite Rate of Innovation) ableitet. Mit FRI-Sampling, welches beispielsweise in der einleitend genannten Arbeit von Vetteli et al. untersucht wird, können diverse Klassen von Eingangssignalen, wie Dirac-Folgen, abschnittsweise polynomiale Signale oder Splines erfasst werden.

In einem realen System sind Dirac-Pulse nicht möglich. Das Verfahren lässt sich aber auch erweitern, um kurze Pulse wie bei Signallaufzeitverfahren zu verarbeiten, die durch ihre zeitliche Lage $t_k$ und Amplitude $a_k$ beschrieben werden. Das Empfangssignal entsteht, sofern man zunächst Rauscheinflüsse außer Betracht lässt, aus einer Überlagerung von Pulsen $p$ einer bekannten Pulsform, die jeweils aus einer Reflexion entstehen. Für das vollständige Eingangssignal $x(t)$ gilt dann

$$x(t) = \sum_{k=1}^{K} a_k\, p(t - t_k)\,.$$

Obwohl der Informationsgehalt de Eingangssignals $x(t)$ für $K$ Pulse auf $2K$ Freiheitsgrade für die beiden jeweiligen Parameter $t_k$, $a_k$ beschränkt ist, wird je nach Kürze der Pulse nach dem Shannon-Nyquist-Kriterium eine sehr hohe Abtastrate benötigt, die im Grenzfall von Dirac-Pulsen unendlich wird, um das Eingangssignal $x(t)$ zu erfassen.

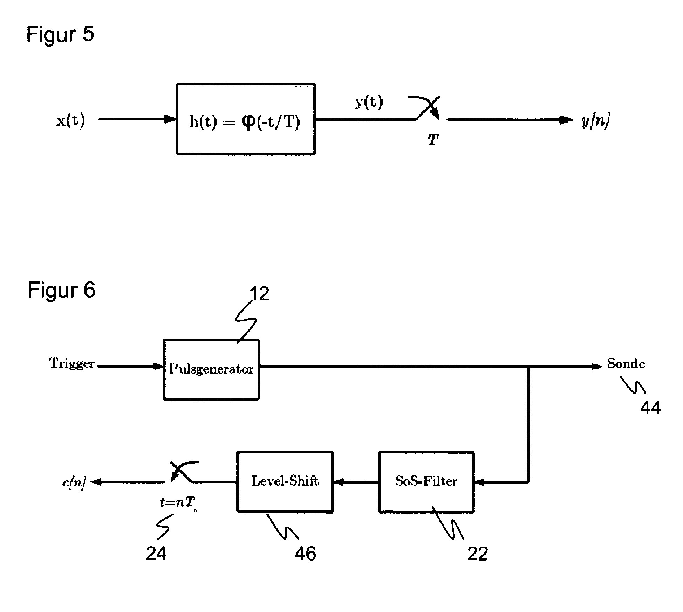

Wie in Figur 5 illustriert, besteht der Ansatz des FRI-Samplings nun darin, das Eingangssignal $x(t)$ auf ein Filter 22 mit bekannter Übertragungsfunktion $h(t)$ zu geben, insbesondere ein Tiefpassfilter, indem die Pulse $p$ zeitlich gestreckt werden, so dass sie von dem A/D-Wandler 26 trotz dessen vergleichsweise langsamer Abtastrate erfasst werden können. Anschließend wird aus der Abtastfolge $y[n]$ das Eingangssignal $x(t)$ rekonstruiert.

Um dies berechnen zu können, wird zunächst das Eingangssignal $x(t)$ dargestellt als

$$x(t) = \sum_{k=0}^{K-1} a_k \sum_{m \in Z} p(t - t_k - m\tau) = \sum_{k=0}^{K-1} a_k \frac{1}{\tau} \sum_{m \in Z} \hat{p}\!\left(\frac{2\pi m}{\tau}\right) e^{j2\pi \frac{t-t_k}{\tau}} = \sum_{m \in Z} \hat{x}\, e^{j2\pi \frac{t}{\tau}},$$

wobei $x(t)$ als periodisches Signal mit Periodendauer $\tau$ vorausgesetzt wird. Diese Bedingung ist erfüllt: Auf einen Sendepuls folgt eine Anzahl von $K$ Echos beziehungsweise Reflexionspulsen. Das Sendesignal wird wiederholt ausgesandt, meist mit einer festen Periodendauer, was sich in der zweiten Summe in der angegebenen Gleichung ausdrückt. Dann ist klar, dass sich das Eingangssignal $x(t)$ wie angegeben als inverse Fourier-Transformierte darstellen lässt. Interessanter ist die dabei resultierende Rechenvorschrift für die Fourierkoeffizienten $\hat{x}_m$:

$$\hat{x}_m = \frac{1}{\tau} \hat{p}\!\left(\frac{2\pi m}{\tau}\right) \sum_{k=0}^{K-1} a_k\, e^{-j2\pi m \frac{t_k}{\tau}}\,.$$

Die Periodendauer $\tau$ sowie die Fourierkoeffizienten $\hat{p}_m$ der Pulse $p$ sind bekannt oder aus bekannten Größen ableitbar. Mit der Definition $u_k = e^{-j2\pi \frac{t_k}{\tau}}$ und $\hat{p}^{-1}$ als Inverser zu $p$ wird aus der soeben angegebenen Rechenvorschrift

$$\hat{x}_m \hat{p}_m^{-1}\left(\frac{2\pi m}{\tau}\right) = \frac{1}{\tau}\sum_{k=0}^{K-1} a_k u_k^m \ .$$

Die Parameter $a_k$ sind die gesuchten Amplituden, während die $u_k$ den zeitlichen Positionen $t_k$ entsprechen. Um diese zu berechnen, wird das Auslöschungsfilter $h_m$ gesucht, welches das Eingangssignal $x(t)$ eliminiert, d.h. es soll gelten

$$h_m * \hat{x}_m = \sum_{i=0}^{K} h_i \hat{x}_{m-i} = \sum_{i=0}^{K}\sum_{k=0}^{K-1} a_k h_i u_k^{m-1} = \sum_{k=0}^{K-1} a_k u_k^m \sum_{i=0}^{K} h_i u_k^{-i} = 0 \ .$$

Es lässt sich also aus der Auslöschbedingung trotz der hochgradig nichtlinearen Beziehungen zwischen den Zeitkonstanten $t_k$ und dem Eingangssignal $x(t)$ ein lineares Gleichungssystem zur Bestimmung des Auslöschungsfilters $h_m$ ableiten, das vergleichsweise einfach zu lösen ist.

Schreibt man die obige Bestimmungsgleichung für das Auslöschungsfilter $h_m$ in Matrixform um, wobei $h_0 = 1$ angenommen wird und deshalb die Ordnung des Gleichungssystems um eins sinkt, so wird eine besondere Struktur erkennbar, welche die Lösung zusätzlich erleichtert:

$$\begin{pmatrix} \hat{x}_{-1} & \hat{x}_{-2} & \cdots & \hat{x}_{-K} \\ \hat{x}_0 & \hat{x}_{-1} & \cdots & \hat{x}_{-K+1} \\ \vdots & \vdots & \ddots & \vdots \\ \hat{x}_{K-2} & \hat{x}_{K-3} & \cdots & \hat{x}_{-1} \end{pmatrix} \times \begin{pmatrix} h_1 \\ h_2 \\ \vdots \\ h_K \end{pmatrix} = -\begin{pmatrix} \hat{x}_0 \\ \hat{x}_1 \\ \vdots \\ \hat{x}_{K-1} \end{pmatrix} \ .$$

In dieser Matrix sind nämlich die Diagonale und alle Nebendiagonalen mit jeweils dem gleichen Wert besetzt, die Matrix ist eine sogenannte Toeplitz-Matrix, die nur die Dimension $2K$ statt $K^2$ besitzt. Diese Struktur kann für eine optimierte Lösung des Gleichungssystems ausgenutzt werden.

Das derart gewonnene Auslöschungsfilter $h_m$ wird dann analytisch über seine z-Transformierte ausgedrückt und in die Produktform gebracht, so dass daraus die $K$ Nullstellen und damit die $u_k$ beziehungsweise die Pulspositionen $t_k$ ablesbar werden:

$$\hat{h}(z) = \sum_{m=0}^{K} h_m z^{-m} = \prod_{m=0}^{K-1}(1 - u_k z^{-1}) \ .$$

Um auch die Amplituden $a_k$ zu bestimmen, wird die oben angegebene Gleichung

$$\hat{x}_m \hat{p}_m^{-1}\left(\frac{2\pi m}{\tau}\right) = \frac{1}{\tau}\sum_{k=0}^{K-1} a_k u_k^m$$

mit den nun bekannten $u_k$ ebenfalls ein Matrixform ausgeschrieben:

$$\frac{1}{\tau}\begin{pmatrix} 1 & 1 & \cdots & 1 \\ u_0 & u_1 & \cdots & u_{K-1} \\ \vdots & \vdots & \ddots & \vdots \\ u_0^{K-1} & u_1^{K-1} & \cdots & u_{K-1}^{K-1} \end{pmatrix} \times \begin{pmatrix} a_0 \\ a_1 \\ \vdots \\ a_{K-1} \end{pmatrix} = \begin{pmatrix} \hat{x}_0 \\ \hat{x}_1 \\ \vdots \\ \hat{x}_{K-1} \end{pmatrix} \ .$$

Dieses lineare Gleichungssystem kann ohne weitere Komplikationen eindeutig gelöst werden.

Dieses Verfahren zur Rekonstruktion ist sehr allgemein, denn es werden keine Voraussetzungen an die Abtastfolgen gestellt. Das rekonstruierte Eingangssignal $x(t)$ ist das Richtige, weil die z-Transformation eine bijektive Abbildung ist. Anders als bei anderen Ansätzen des Compressive Sensing wird keine zufällige Abtastung gefordert. Eine strukturierte, insbesondere äquidistante Abtastung lässt sich mit realen A/D-Wandlern 24 wesentlich einfacher implementieren.

Das Filter 22 ist dafür verantwortlich, die Pulse zu strecken, damit der A/D-Wandler 24 sie in der reduzierte Abtastrate digitalisieren kann. Deshalb lohnt es sich, die Anforderungen an das Filter 22 näher zu beleuchten. Das Filter 22 nimmt die Rolle des sogenannten "Sampling Kernels" der einschlägigen Literatur ein und wird dort oft als SoS-Filter ("Sums of Sincs") bezeichnet. Das liegt an einer bevorzugten Darstellung des Filters als Überlagerung von sinc-Funktionen im Frequenzbereich. Tatsächlich muss aber kein kompliziertes Filter 22 auf dieser Basis designt werden, weil auch ein Tiefpass die erforderliche zeitliche Streckung leistet.

Für ein ideales Tiefpassfilter, das bei einer Frequenz $B$ rechteckförmig abschneidet, muss mit einer Abtastrate $f_a = 2B$ gearbeitet werden, wenn Aliaseffekte ausgeschlossen werden sollen. Die Wahl von Bandbreite des Filters 22 und geeigneter Abtastfrequenz des A/D-Wandlers 24 ist also nicht unabhängig. Ein reales Filter 22 muss im Gegensatz zu einem idealen Filter mit einer endlichen Ordnung auskommen, sogar mit einer möglichst kleinen Ordnung, um die Anforderungen an den Filterbaustein gering zu halten. Im Stand der Technik wird hierzu angegeben, dass die erforderliche Ordnung $N_F \geq 2K$ -1 für ein Signal mit $K$ Pulsen betragen muss. Diese Anforderung kann aber hier entspannt werden, weil nur Pulse relevant sind, die sich innerhalb einer Breite der Impulsantwort des Filters 22 überlagern können.

Tatsächlich kann sogar gezeigt werden, dass jede Filterfunktion für FRI-Sampling eingesetzt werden kann, deren Eingangs- zu Ausgangsverhalten mit linearen Differentialgleichungen beschrieben werden kann. Damit ist sichergestellt, dass es geeignete Filter 22 nicht nur in der Theorie gibt. Möglicherweise genügen deshalb bereits in den Schaltungen vorhandene Tiefpasseigenschaften, um das Filter 22 zu ersetzen. Jedenfalls liefert ein Tiefpassfilter mit Tschebyscheff-Charakteristik und Ordnung 6, das auch passiv aufgebaut sein kann, ausreichend gute Ergebnisse.

Figur 6 zeigt den schematischen Aufbau eines Messkerns ähnlich Figur 1 am Beispiel einer TDR-Füllstandsmessung, wobei die Darstellung näher an die soeben vorgestellte Signalrekonstruktion angelehnt ist. Das Beispiel einer TDR-Füllstandsmessung soll nicht beschränkend aufgefasst werden, die Konzepte sind auf andere Signallaufzeitmessungen beispielsweise im optischen Bereich übertragbar. Dennoch ergeben sich im Detail Unterschiede. So sind Signale bei der TDR-Füllstandsmessung wesentlich breitbandiger als optische Signale, und zudem können bei TDR-Systemen erheblich mehr Reflexionen auftreten, deren Positionen bestimmt werden sollen.

Im Empfangspfad gemäß Figur 6 wird das Signal direkt abgetastet, statt wie im Stand der Technik üblich durch Unterabtastung in mehreren Wiederholungen der Aussendung des Sendepulses. Das Filter 22, welches das Eingangssignal von der Sonde 44 in einen entsprechenden Unterraum mit zeitlich gestreckten Pulsen bringt, wird in manchen Figuren der Tradition folgend als SoS-Filter bezeichnet, obwohl es wie beschrieben ein einfacher Tiefpass sein kann. Da die AD-Wandler 24 im Eingangsspannungsbereich in der Regel unipolar ausgelegt sind, erfolgt nach dem Filter 22 eine Pegelanhebung 46 des Signals in den positiven Spannungsbereich. Die Pegelanhebung 46 kann nach dem Filter 22 lediglich auf die geringeren Frequenzen nach der Filterung ausgelegt werden.

Um den Gewinn an zeitlicher Auflösung abzuschätzen, der durch die Signalrekonstruktion möglich ist, sei beispielhaft ein Eingangssignal $x(t)$ mit $K$=5 Pulsen und eine Länge der Pulsfolge von $\tau$=25ns betrachtet. An der theoretischen Grenze $f_{Sample} = N/\tau$, $N = 2K + 1$ ergibt sich dann ein Wert von ungefähr $f_{Sample}$ = 440 MHz. Das ist immer noch eine recht hohe Wandelrate, die Ansprüche an den A/D-Wandler 24 stellt. Das relativiert sich, wenn man zum Vergleich die Erfordernisse einer Abtastung ohne Signalrekonstruktion abschätzt: Für Messsignale beispielsweise mit einer Pulsbreite von 500 ps beträgt die 3dB-Bandbreite ungefähr 2 GHz. Sollten Signalanteile bis zu Frequenzen mit einem Faktor 3 oberhalb der 3dB-Bandbreite berücksichtigt werden, so müsste mit unverhältnismäßig hohen >12GHz abgetastet werden.

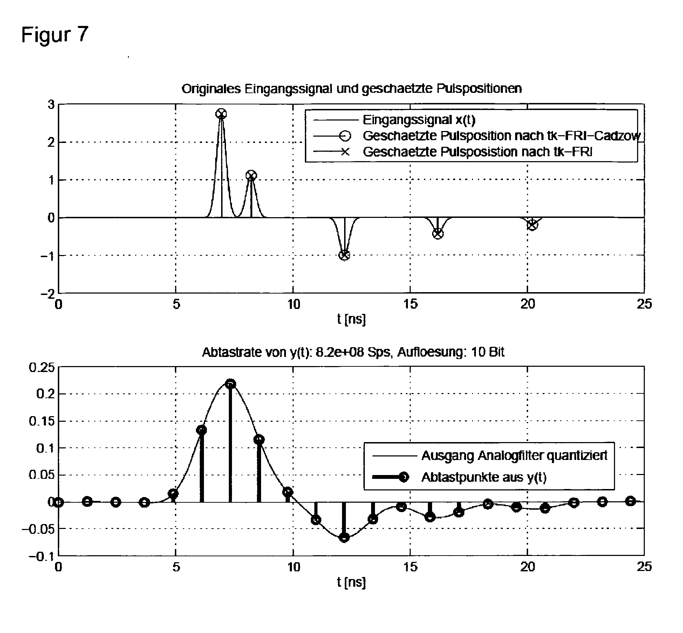

Figur 7 zeigt ein Simulationsergebnis der beschriebenen Rekonstruktion. Im oberen Teil wird das ursprüngliche Eingangssignal $x(t)$ gezeigt. Es weist insgesamt fünf Pulse auf: einen Sendepuls, einen Übergangspuls bei Austritt des Sendepulses in den eigentlichen Messbereich und drei Pulse abnehmender Amplitude, die einer Mehrfachreflexion im Messbereich entsprechen. Im unteren Teil stellt Figur 7 das Rohsignal mit den wenigen Abtastungen des A/D-Wandlers 24 nach Durchgang durch das Filter 22 dar. Dabei wurde ein zeitlicher Versatz durch das Filter 22 zur besseren Übersicht korrigiert. In dem Rohsignal erscheinen die beiden anfänglichen Pulse gar nicht mehr getrennt, und auch die drei Messpulse beginnen ineinander zu fließen. Dennoch sind die in zwei unterschiedlichen Algorithmen durch die Rekonstruktion bestimmten Pulspositionen und Pulsamplituden, die im oberen Teil der Figur 7 als Kreise beziehungsweise Kreuze markiert sind, in sehr guter Übereinstimmung mit dem ursprünglichen Eingangssignal $x(t)$.

Das Rekonstruktionsbeispiel der Figur 7 beruht auf einem idealisierten Eingangssignal $x(t)$ und einer verlustfreien Abtastung. In der realen Messanwendung muss aber mit einer Reihe von Störeinflüssen gerechnet werden, die im Folgenden diskutiert werden.

Als ein erster Störeffekt sind Quantisierungsfehler zu nennen. Auch wenn durch die Signalrekonstruktion die erforderliche Abtastrate des A/D-Wandlers 24 drastisch auf etwa 400 MHz reduziert werden kann, sind solche Bausteine immer noch kostenintensiv, so dass die Bitbreite begrenzt bleibt. Mit einer Auflösung von 8 Bit können die Rekonstruktionsergebnisse bereits deutlich fehlerbehaftet werden, darunter werden sie häufig unbrauchbar. Problematisch dabei ist, dass die Fehler nicht unbedingt normalverteilt sind. Dies hat zur Folge, dass eine Mittelung auf Ebene der rekonstruierten Signale nicht weiterhilft. Erst ab einer Bitbreite von 10 Bit tritt dieser Effekt in den Hintergrund, und die Fehlerverteilung wird gaussisch. Möchte man mit geringeren Bitbreiten auskommen, so müssen bessere Abtastwerte vorliegen, d.h. bereits auf Ebene des Rohsignals eine Aufbereitung beispielsweise durch Messwiederholungen erreicht werden, wie weiter unten noch ausgeführt.

Ein zweiter Störeffekt ist Eingangsrauschen. Im Stand der Technik findet sich die Behauptung, dass die Rekonstruktion mittels Auslöschungsfilter unter Rauschen allgemein nicht robust funktioniert. Dass ist aber so nicht richtig. Eingangsrauschen bedeutet, dass in der Bestimmungsgleichung $Ah=0$ für den Auslöschungsfilter die Matrix $A$, die der oben angegebenen Toeplitz-Matrix im rauschfreien Fall entspricht, durch eine gestörte Matrix $\tilde{A}$ entsprechend dem rauschbehafteten Eingangssignal $\tilde{x}(t)$ ersetzt werden muss. Auch für die dadurch entstehende neue Bestimmungsgleichung des Auslöschungsfilters $\tilde{A}h = 0$ gibt es Lösungsansätze.

Bei der TLS-Methode (Total-Least-Square) wird das Optimierungsproblem

$$\min_{h}\left\|\widetilde{A}h\right\|^{2} \text{ unter der Bedingung } \left\|h\right\|^{2}=1$$

gelöst. Daraus resultiert die minimal mögliche Matrix $\tilde{A}$, um das Auslöschungsfilter zu gewinnen. Wie im rauschfreien Fall werden danach die Nullstellen für die Zeitkonstanten berechnet. Bei höherem Rauschniveau kann die TLS-Methode allerdings unzuverlässig werden.

Der Cadzow-Algorithmus verfolgt einen anderen Ansatz. Gesucht wird hierbei eine Matrix $A'$ mit kleinstem Abstand zu $\tilde{A}$, wobei aber $A'$ an den rauschfreien Fall der Matrix $A$ angelehnt ist, welche die Toeplitz-Eigenschaft und den Rang $K$ hat:

$$\min_{A'}\left\|\widetilde{A} - A\right\|_{F}^{2},$$

so dass gilt $rank(A') \leq K$ und A' ist eine Toeplitz-Matrix.

Eine vorteilhafte praktische Umsetzung ist, den Cadzow-Algorithmus bis zu einem Abbruchkriterium, etwa einer vorgegebenen Maximalzahl von Iterationen, laufen zu lassen und anschließend die TLS-Methode einzusetzen, für die dann die Voraussetzung eines nicht zu hohen Rauschniveaus gegeben ist. Der Cadzow-Algorithmus verbessert so die Bestimmung der Zeitkonstanten $t_k$ unter Rauschen gegenüber der reinen TLS-Methode erheblich.

Durch derartige Verfahren gelingt die Rekonstruktion auch unter starkem Eingangsrauschen. Dabei hilft die Bandbegrenzung des Eingangsrauschens durch das Filter 22. Dennoch kann auch hier eine Signalaufbereitung auf Ebene des Rohsignals die Ergebnisse weiter verbessern.

Ein dritter Störeffekt ist Abtastzeitjitter. Dies bezeichnet unvermeidliche Schwankungen in der zeitlichen Position der Abtastpunkte des A/D-Wandlers 24. Bei einem Abtastjitter von 20 ps ohne weitere Störeffekte ergibt sich ein Fehler in der Rekonstruktion der Pulspositionen von weniger als 40 ps. Ein Abtastjitter von $\sigma$ =50 ps führt schon zu einer Ungenauigkeit von bis zu 450 ps. Dabei reduziert das Filter 22 das Frequenzspektrum vor dem A/D-Wandler 24 bereits deutlich. Bei herkömmlicher Direktabtastung mit Bandbreiten von 2GHz und mehr würden Effekte durch Abtastjitter noch wesentlich drastischer ausfallen. Dennoch sind mit den genannten Fehlern Millimeterbestimmungen in einer Einzelmessung nicht möglich. Abhilfe kann erneut die Aufbereitung des Rohsignals schaffen, beispielsweise durch Mittelung. Hierbei kann Abtastjitter sogar nützlich sein. Dies ist Ausdruck des unter dem Stichwort Dithering bekannten allgemeinen Gedankens, dass Rauscheffekte unter gewissen Umständen eine Messung sogar verbessern. Durch die verschiedenen zeitlichen Abweichungen der realen Abtastung gegenüber einer idealen Abtastung wird nämlich in diesem Fall ein durch die Ablage bei einer Einzelmessung entstehende Amplitudenfehler ausgemittelt.

Als vierter Störeffekt ist der Einfluss von Störquellen des Umfeldes der Messung zu nennen. Dabei wird zwischen transienten Störern und Dauerstörern unterschieden. Als Störer in diesem Sinne können auch andere, insbesondere baugleiche Messsysteme aufgefasst werden, deren Signale unbeabsichtigt wechselseitig erfasst werden. Störer sind zunächst natürlich nur im Durchlassbereich des Filters 22 relevant. Störungen, die in der Größenordnung der Dauer des Eingangssignals $x(t)$ über eine Messung liegen, zerstören in der Regel dessen dünne Besetzung im Zeitbereich zumindest im Sinne des zugrundeliegenden Modells sich überlagernder Pulse und haben deshalb erheblichen Einfluss auf die Rekonstruktion. Pulsartige Störer werden besser vertragen. Soweit Störungen nicht durch bauliche Maßnahmen wie Abschirmungen unterdrückt werden können, erfolgt vorzugsweise eine Aufbereitung des Rohsignals, um die anschließende Rekonstruktion zu verbessern. Dazu kann erneut eine Scharmittelung mehrerer Messwiederholungen erfolgen. Ein seltener transienter Störer wird dadurch offensichtlich ausgemittelt. Für einen kontinuierlichen Störer soll dagegen ausgeschlossen werden, dass dieser sich gemäß einer festen Phasenbeziehung zum Eingangssignal $x(t)$ verhält und damit in der Scharmittelung aufaddiert. Diese Phasenbeziehung kann gezielt aufgebrochen werden, indem im Sendepfad eine zufällige Verzögerung der einzelnen Messwiederholungen vorgenommen wird, die dann vor der Mittelung wieder kompensiert wird. Dadurch werden die Wiederholrate der Messung und die Frequenz des Störers entkoppelt.

Als fünften Störeffekt kann man die Annahmen ansehen, welche in die Rekonstruktion einfließen. Dies ist zunächst die Anzahl $K$ der Pulse. In der Regel werden auf Basis des Cadzow-Algorithmus' diejenigen Pulse mit der größten Amplitude rekonstruiert, wenn die Anzahl $K$ zu gering angesetzt wird. Eine zu große angenommene Anzahl $K$ führt dazu, dass die Rekonstruktion tatsächlich nicht existente Pulse kleiner Amplitude hinzufügt. Ein mögliches Vorgehen besteht also darin, die Anzahl $K$ zunächst zu hoch anzusetzen und das rekonstruierte Signal anschließend mittels Plausibilitätsbetrachtungen zu bereinigen. Da eine erhöhte Anzahl $K$ auch eine höhere Abtastrate fordert, kann es nützlich sein, $K$ iterativ so lange zu reduzieren, wie plausible Rekonstruktionen erreicht werden.

Eine weitere Annahme liegt in der Pulsform. Dabei kommt es auf die Sendepulsform selbst nicht an, solange der Sendepuls kurz genug ist und das Filter 22 somit praktisch mit seiner Impulsantwort auf den Sendepuls reagiert, deren Dauer dann die Dauer des Sendepulses dominiert. Demnach muss nicht die Sendepulsform bekannt sein, sondern die Impulsantwort des Filters 22. Auch diese Impulsantwort kann Driften unterliegen. Dem wiederum kann mit einer Rekalibrierung begegnet werden, bei dem die Impulsantwort erneut vermessen wird. Damit der relativ langsame A/D-Wandler 24 die Impulsantwort mit hinreichender zeitlicher Auflösung erfasst, kann eine versetzte Parallelabtastung erfolgen (interleaved sampling), bei der also Zwischenwerte durch gezielte Verzögerungen des Sendepulses abgetastet werden.

Die Unabhängigkeit von der Sendepulsform gilt nicht in einer weiteren bevorzugten Ausführungsform, in dem auf das Filter 22 verzichtet wird und die Sendepulse direkt so breit ausgesandt werden, dass der A/D-Wandler 24 sie zeitlich auflösen kann. Das ist im Prinzip möglich, weil es für die Rekonstruktion keine Rolle spielt, aus welcher Quelle die Eingangsdaten stammen. In diesem Fall ist aber eine genaue Kenntnis der Sendepulsform erforderlich, die analog zu einer Bestimmung der Impulsantwort vermessen werden kann.

Ein sechster und letzter hier betrachteter Störeffekt kann in einer Übersteuerung des Empfangspfades liegen. Dem wird, sofern der Dynamikbereich nicht ausreicht, durch logarithmische Verstärkung oder das Abschneiden (Clipping) zu hoher Eingangssignale begegnet. Zumindest die logarithmische Verstärkung kann dann anschließend anhand der Kennlinie des Verstärkers digital korrigiert werden. Besser ist eine dynamische Verstärkung, die ein Übersteuern direkt an der Quelle verhindert.

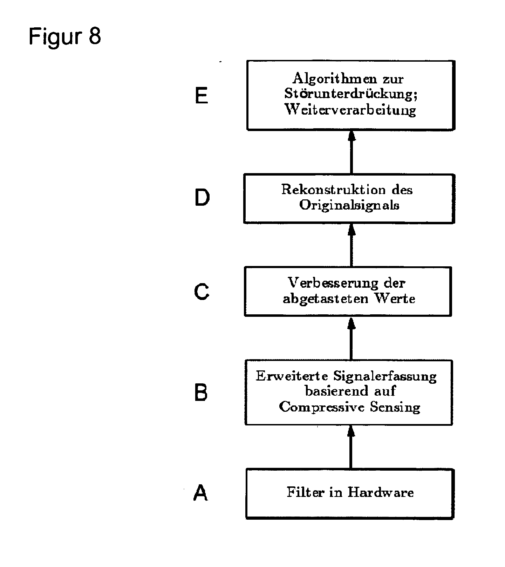

Wie sich in der Diskussion der verschiedenen Störeinflüsse zeigt, setzen mögliche Gegenmaßnahmen, die eine erfolgreiche Rekonstruktion ermöglichen, auf unterschiedlichen Ebenen an. Dies wird in Figur 8 noch einmal systematisch in einer hierarchischen Gliederung zusammengefasst.

Auf Ebene A sind Hardwaremaßnahmen angesiedelt wie Abschirmungen, Befilterung des Signalpfads oder gezielte Codierung der Polarisationsrichtung von Systemen. Diese Maßnahmen sind jedoch für viele Anwendungsfälle nicht umsetzbar, wie beispielsweise in einem TDR-System, das einen breitbandigen Empfangskanal aufweisen muss und zwangsläufig sowohl Störer wie auch das Nutzsignal im gleichen Frequenzbereich zu liegen kommen.

Auf Ebene B erfolgt eine Signalabtastung gemäß Compressive Sensing. Die Abtastung selbst kann so gestaltet werden, dass sie zu Störsignalen inkohärent erfolgt, etwa mittels eines Zeitsprungverfahrens (Time Hopping).

Die darauf aufbauende Ebene C sorgt dafür, dass die dünne Besetzung oder Spärlichkeit in den Abtastwerten (wieder)hergestellt wird, beispielsweise durch Scharmittelung vieler Abtastserien. Denkbar wäre, im Zeitbereich eine spärliche Besetzung durch Nullsetzen sehr kleiner Signalwerte zu erzwingen (hard thresholding). Es ist aber zu beachten, dass die dünne Besetzung nicht zwingend direkt in den Abtastwerten selbst zu erkennen sein muss, da diese nur zu einer bestimmten Basis $\Psi$ erforderlich ist. Weiterhin können Quantisierungseffekte etwa mittels Dithering reduziert werden.

Auf Ebene D erfolgt die eigentliche Rekonstruktion, sei es allgemein durch Optimierung der $L_1$-Norm des Signals oder ein anderes Verfahren wie mittels Auslöschungsfilter.

Auf Ebene E können bekannte digitale Methoden einschließlich nichtlinearer Filter eingesetzt werden, um das rekonstruierte Signal weiterzuverarbeiten und Störer aufgrund von bekannten Konstellationen oder Schätzern zu unterdrücken. Auch Plausibilitätsprüfungen sind üblicherweise auf dieser Ebene anzusiedeln.

Die Untersuchungen der Rekonstruktion von Eingangssignalen für die Signallaufzeitmessung zeigen, dass die Rekonstruktion eines Rohsignal mit den Verfahren des Compressive Sensing unter den in der Praxis vorkommenden Störeinflüssen fehlschlagen kann. Gegenmaßnahmen auf den höheren Ebenen D und E, also Optimierungen der Rekonstruktion oder digitale Nachbearbeitung, können eine unzureichende Signalqualität auf den unteren Ebenen A bis C häufig nicht mehr kompensieren. Es ist prinzipiell anzustreben, die Störsignale auf einer möglichst tiefen Ebene zu dämpfen, und für einige Störeinflüsse ist dies eine Voraussetzung, damit die Rekonstruktion überhaupt gelingt.

Die oben vorgestellte Rekonstruktion anhand einer Überlagerung von Pulsen mit zeitlicher Position $t_k$ und Amplitude $a_k$ hat bei der Signallaufzeitmessung noch einen weiteren Vorteil. Denn meist interessiert man sich hier gar nicht für das rekonstruierte Eingangssignal $x(t)$ selbst, sondern für den Empfangszeitpunkt. Das ist aber nichts anderes als die zeitliche Position $t_k$ eines Pulses in dem Eingangssignal $x(t)$, der einer Reflexion an einem zu vermessenden Objekt zugeordnet werden kann. In diesem Sinne trägt die Rekonstruktion bereits die komplette Auswertung in sich.

Dieser Vorteil zeigt sich besonders bei Überlagerungen von zwei oder mehr Pulsen. Selbst bei einem perfekt abgetasteten Eingangssignal $x(t)$ ohne jeden Störeinfluss stellt es eine Herausforderung dar, in solchen Doppel- oder Mehrfachpulsen Einzelpulse zu erkennen und deren Lage präzise zu bestimmen. Herkömmliche Verfahren bestimmen dafür nämlich lokale Extrema, bewerten die Flankensteilheit und ähnliches. Diese Bewertung schlägt bei ineinanderlaufenden Pulsen immer wieder fehl. Konkret messen deshalb TDR-Sensoren nur Schichten ab einer Mindestdicke zuverlässig.

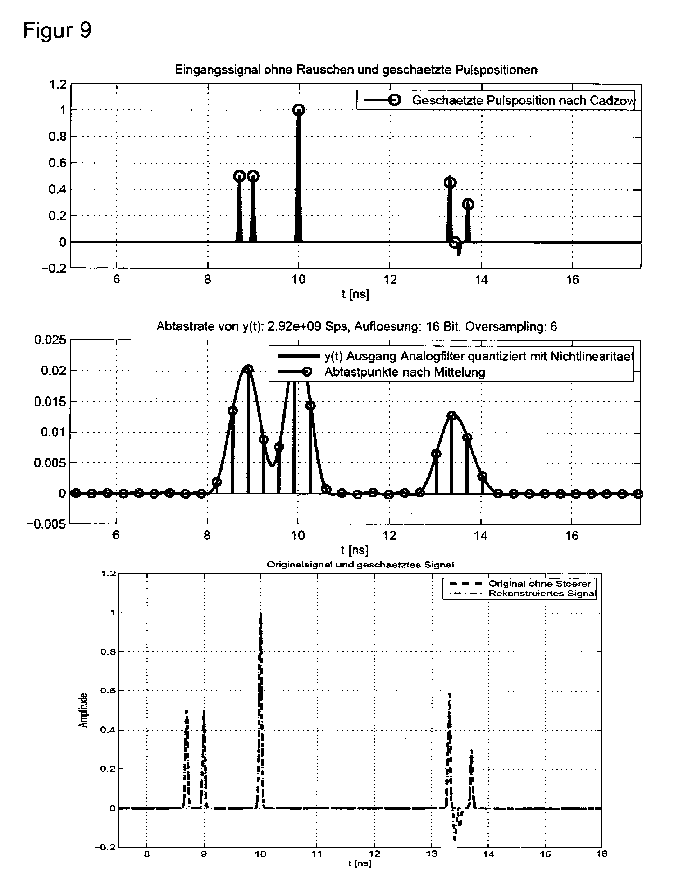

Mit der Rekonstruktion werden derart ineinanderlaufende Pulse unter gewissen Voraussetzungen getrennt. Figur 9 zeigt oben ein beispielhaftes Signal mit zwei sehr nahe aneinander liegenden Pulsen im Anfangsbereich und im weiteren Verlauf des Signals drei eng benachbarten Pulsen, von denen der mittlere auch noch das Vorzeichen wechselt. Wie in der Mitte von Figur 9 in dem entsprechenden Rohsignal mit den Abtastungen des A/D-Wandlers 24 zu erkennen, sind die Überlagerungen mit bloßem Auge nicht aufzulösen, so dass man auch von einer herkömmlichen automatisierten Pulserkennung keine guten Ergebnisse erwarten würde. Allenfalls dem hinteren Überlagerungspuls ist anzusehen, dass die Form verzerrt ist, nicht aber, welche konkreten Pulse zu dieser Überlagerung beitragen.

Unten in Figur 9 wird das rekonstruierte Eingangssignal $x(t)$ gezeigt. Die für die Rekonstruktion geschätzten Pulspositionen und Pulsamplituden sind im oberen Teil der Figur 9 mit kleinen Kreisen eingezeichnet und entsprechen sehr gut den aufgetrennten Einzelpulsen. Im Grunde muss also für eine Signallaufzeitmessung die Rekonstruktion gemäß dem unteren Teil der Figur 9 gar nicht mehr explizit gebildet werden.

Die erfolgreiche Rekonstruktion und Pulstrennung im Falle ineinanderlaufender Pulse gemäß Figur 9 steht unter einigen Voraussetzungen. Hier wurde eine relativ hohe Bitbreite des A/D-Wandlers von 16 Bit und eine Überabtastung mit einem Faktor acht verwendet. Die Überabtastung bezieht sich dabei auf das theoretische untere Limit von $2K$ Abtastungen. Damit ein vergleichsweise langsamer A/D-Wandler 24 eine solche Überabtastung leistet, kann eine versetzte Parallelabtastung eingesetzt werden. Verzichtet man auf die Überabtastung, so schlagen sich die Unterschiede zwischen einem Überlagerungs- und einem Einzelpuls nur in kleinen Amplitudenunterschieden des Rohsignals nieder, so dass eine sehr hohe und in der Praxis unerreichbare Bitbreite des A/D-Wandlers 24 erforderlich wäre. Auch bei einer moderaten Überabtastung mit Faktor 2 genügt eine Bitbreite von 16 Bit noch nicht für eine zufriedenstellende Rekonstruktion und Pulstrennung.

Eine Pulstrennung im Rahmen der Rekonstruktion des Eingangssignals $x(t)$ ist somit möglich, sollte aber vorzugsweise unter einer deutlichen Überabtastung mit Faktoren größer 2 erfolgen. Mit einer Überabtastung korrespondiert jeweils eine Anpassung des Filters 22. Zwar sind dessen Bandbreite und der Faktor der Überabtastung nicht direkt voneinander abhängig, sehr wohl aber insofern miteinander gekoppelt, als sie sich gegenseitig sinnvolle Bereiche vorgeben.

Die Pulstrennung gelingt nur, wenn das Rohsignal eine ausreichende Qualität aufweist. Deshalb werden vorzugsweise Maßnahmen wie eine Scharmittelung zur Aufbereitung des Rohsignals vor der Rekonstruktion vorgenommen.

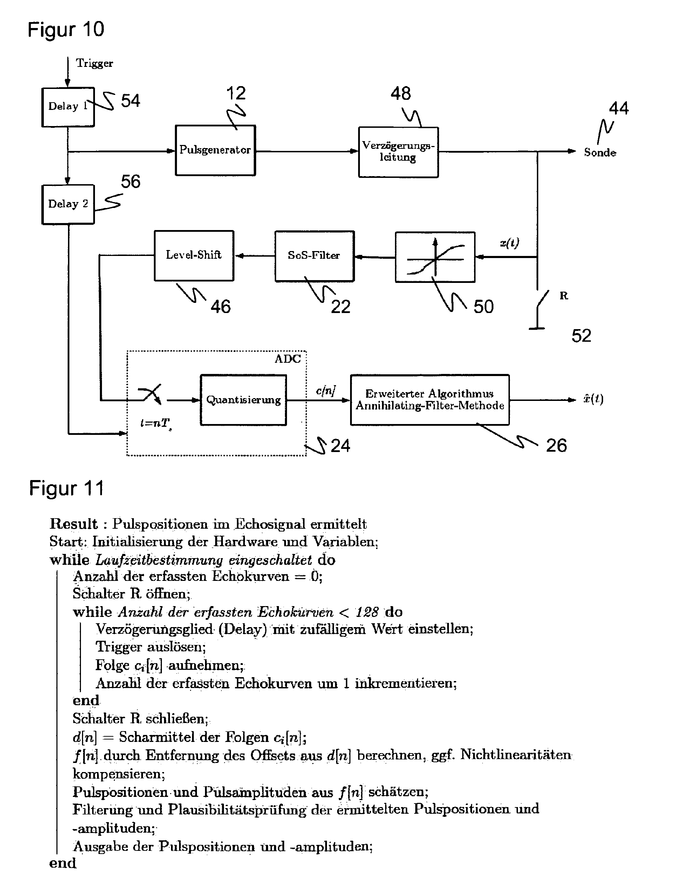

Figur 10 zeigt das Gesamtsystem mit den diskutierten Erweiterungen gegenüber der Figur 7 noch einmal in einer Übersichtsdarstellung. Der Pulsgenerator 12 wird durch einen Trigger aktiviert, und der generierte elektrische Puls wandert Richtung Sonde 44. Eine Verzögerungsleitung 48 im Sendepfad vor oder hinter dem Pulsgenerator 12 hat die Aufgabe, den Sendepuls von auftretenden Reflektionen zeitlich zu trennen, damit wie vorgeschlagen durch Messung der Systemantwort auf eventuelle Veränderungen der Übertragungsfunktion des Filters 12 zurückgerechnet werden kann. In einer alternativen Ausgestaltung als optischer Entfernungsmesser generiert der Pulsgenerator 12 einen optischen Puls, insbesondere Laserpuls, der durch das optische System in Richtung des Gegenstands oder der Person geleitet wird, dessen beziehungsweise deren Entfernung bestimmt werden soll. Bei optischer Messung wird die Verzögerung 48 vorzugsweise vor der optischen Pulsgenerierung und nicht erst im optischen Pfad durchgeführt. Der remittierte Laserpuls wird in ein elektrisches Signal zurückgewandelt. Dieser Schritt entfällt bei dem hier betrachteten TDR-System, bei dem die Echos von der Sonde 44 direkt einer Begrenzerschaltung 50 zugeführt werden. Die Begrenzerschaltung 50 soll sicherstellen, dass trotz Störeinflüssen oder zu hohen Empfangspegeln die nachfolgende Schaltung mit Filter 22, Pegelanpassung und A/D-Wandler 24 stets im linearen Bereich arbeitet und die Übertragungsfunktion erhalten bleibt.

Am Eingang der Signalaufnahme vor der Begrenzerschaltung 50 ist ein mit R für Reset bezeichneter Schalter 52 vorgesehen, der dazu dient, das Eingangssignal $x(t)$ in den Empfangspausen auf Null zu halten, damit sich das analoge System beim Starten des Sende- und Abtastvorgangs in einer Ruhelage befindet. Die Rekonstruktion des in Figur 10 mit c[n] bezeichneten Rohsignals geht davon aus, dass anregende Pulse gesucht werden, die zu der gemessenen Impulsantwort des System und insbesondere des Filters 22 führen. In einer realen Anwendung werden jedoch immer Störer oder Mehrfachreflektionen von vorhergehenden Sendepulsen vorhanden sein, die sich der Messung überlagern und stören würden. Damit das System ausschwingen und in den Ruhezustand kommen kann, wird vorgeschlagen, dass nach der Aufnahme des Empfangssignals sofort der Schalter 52 geschlossen und erst kurz vor einer neuen Signalaufnahme wieder geöffnet wird. Der Schalter 52 ist vorzugsweise als hochfrequenztauglicher Halbleiterschalter ausgeführt.

Figur 11 fasst das Verfahren zur Rekonstruktion des Eingangssignals $x(t)$ mit Hilfe eines Auslöschungsfilters *h* in Pseudocode zusammen, das in der Auswertungseinheit 26 implementiert ist. Die analoge Schaltung mit der Pegelanpassung 46 und dem Filter 22 beinhaltet dabei eine ausreichend große Rauschquelle, so dass ein Dithering-Verfahren angewandt werden kann.

Da über einen gewissen Zeitraum die Folgen $c[n]$ als Einzelmessung erfasst werden, die anschließend eine Mittelung erfahren, ist ein ausreichend stabiler Zeittakt im System erforderlich, damit die einzelnen Abtastpunkte bezogen auf das Nutzsignal eine hohe Kohärenz aufweisen. Mit einer optionalen ersten Verzögerungsschaltung 54 wird die mehrfach geschilderte veränderliche Verzögerung realisiert, mit dem eine Störunterdrückung erforderliche Inkohärenz hergestellt, also ein fester Phasenbezug zwischen der Messung und Störeinflüssen aufgebrochen werden kann. Mit einer optionalen zweiten Verzögerungsschaltung 56 wird eine ebenfalls mehrfach angesprochene versetzte Parallelabtastung des A/D-Wandlers 24 realisiert (interleaved sampling).

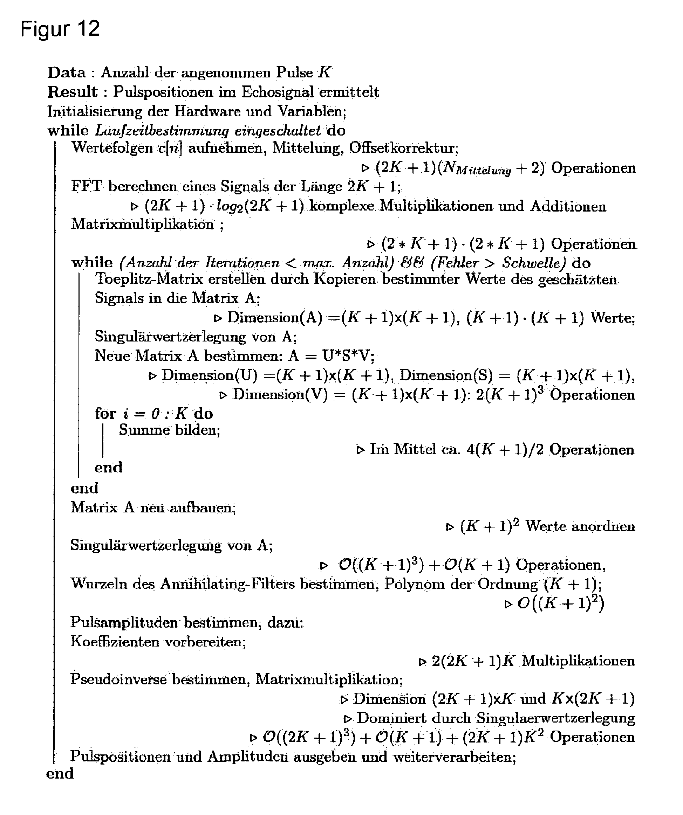

Figur 12 zeigt in Pseudocode eine zusammenfassende Darstellung der Rekonstruktion mittels Auslöschungsfilter und Cadzow-Algorithmus, um den Rechenaufwand abzuschätzen. Für ein konkretes Beispiel mit $K$=10 Pulsen, 128 Messwiederholungen zur Scharmittelung und 40 Iterationen des Cadzow-Algorithmus' ergeben sich etwa 138.000 Rechenoperationen, die mit einem modernen Prozessor bei 100 MHz Taktrate in ca. 15 ms abgearbeitet werden können. Das System bleibt demnach echtzeitfähig. Noch kürzere Ansprechzeiten werden durch Optimierung der bei dieser Abschätzung konservativ angesetzten Schätzer sowie eine Implementierung auf dedizierter Hardware wie einem FPGA erreicht. Außerdem ist in der Regel die Voraussetzung gegeben, dass sich bei Messungen in Abständen von einigen zehn Millisekunden das rekonstruierte Signal gegenüber der vorherigen Messung kaum verändert hat. Deshalb können die Optimierungsverfahren mit den bekannten Messdaten initialisiert werden und konvergieren wegen der großen Ähnlichkeit der Messsituation mit hoher Wahrscheinlichkeit sehr rasch. Das gilt insbesondere für den Cadzow-Algorithmus', der mit einer zuvor berechneten Matrix gestartet wird und dann mit deutlich weniger Iterationen auskommt, oder der gänzlich ausgelassen werden kann, weil bereits die anfängliche Matrix für eine Anwendung des TSL-Verfahrens dem Optimum nahe genug kommt.

Wie oben dargelegt, ist es zusammenfassend erfindungsgemäß möglich, für eine Signallaufzeitmessung ein Eingangssignal $x(t)$ vergleichsweise langsam abzutasten und für eine digitale Auswertung eine Rekonstruktion eines Signals mit gewünschter effektiver zeitlicher Auflösung nach Methoden des Compressive Sensing vorzunehmen. Der reine Rekonstruktionsalgorithmus beispielsweise mittels eines Auslöschungsfilters ist jedoch sehr anfällig gegen Störungen vielfältiger Art. Es wurde dargelegt, dass Eingangsrauschen durch angepasste Rekonstruktionsverfahren insbesondere mittels TSL-Optimierung oder den Cadzow-Algorithmus relativ gut aufgefangen werden kann. Auch gegen andere Störeinflüsse wurden Maßnahmen erläutert, um die Robustheit zu erhöhen und die Qualität der Rekonstruktion zu verbessern.

Zu diesen Maßnahmen zählt, eine möglichst gedächtnisfreie Begrenzerschaltung 50 (Clipping) oder ein Verstärker mit logarithmischer Kennlinie in der Signallaufrichtung vor dem Filter 22 einzufügen, um Störsignale zu limitieren. Nach dem Filter 22 folgt eine Pegelanpassung 46 und ein Treiber für den AD-Wandler 24. Mit dieser Anordnung ist sichergestellt, dass die absichtlich eingebauten Nichtlinearitäten keine negativen Auswirkungen auf die Rekonstruktion haben.

Das Verfahren ist erwartungsgemäß sehr empfindlich gegenüber einer Änderung der Übertragungsfunktion des Filters 22. Dies kann eine Rekalibration mit Nachmessen der Impulsantwort insbesondere durch zeitlich hochaufgelöste versetzte Parallelabtastung ausgleichen.

Die Rekonstruktion stellt ein nichtlineares Verfahren dar. Das bedeutet, dass sich eine Wahrscheinlichkeitsdichte einer störbehafteten Eingangsgröße, hier der Abtastpunkte, in eine Wahrscheinlichkeitsdichte anderer Verteilung der rekonstruierten Werte übersetzt. Eine Filterung der Größen vor oder nach der Rekonstruktion ist also nicht äquivalent. Entsprechend den in Figur 8 gezeigten Ebenen müssen Maßnahmen auf der richtigen Ebene eingesetzt werden, um wirken zu können. Insbesondere kann, wenn Voraussetzungen der Rekonstruktion wie die dünne Besetzung in dem Rohsignal durch Störeinflüsse verloren gehen, dies in der Regel nicht mehr durch nachträgliche Filterung oder Mittelung des rekonstruierten Signals ausgeglichen werden. Deshalb werden vorzugsweise Mehrfachmessungen und eine gemeinsame Bewertung durch Mittelung oder dergleichen durchgeführt, die zu einem verbesserten Rohsignal führen, das erst dadurch einer erfolgreichen Rekonstruktion zugänglich wird.

Eine weitere Verbesserung der Abtastwerte vor der Rekonstruktion kann mit einem Dithering-Effekt erzielt werden, für den zusätzlich zu dem Eingangssignal des A/D-Wandlers 24 ein Rauschsignal addiert oder ohnehin im System vorhandene Rauschquellen oder Jittereffekte genutzt werden. Die effektive Bitbreite des A/D-Wandlers 24 kann ebenfalls durch gemeinsame Bewertung einer Mehrfachmessung erhöht werden, um Quantisierungseffekte in den Griff zu bekommen.

Der Einfluss von äußeren Störquellen lässt sich mit einem Zeitsprungverfahren begrenzen, bei dem mittels der ersten Verzögerungsschaltung 54 dafür gesorgt wird, dass die Störer im Mittel unkorreliert zu den kohärent ausgesandten Sendepulsen mit den darauf folgenden Echos sind.

Bei der Pulslaufzeitbestimmung tritt immer wieder die Problemstellung auf, dass sich Pulse überlagern. Die Rekonstruktion mittels eines Auslöschungsfilters ermöglicht auch die Trennung solcher überlagerter Pulse, sofern Filter 22 sowie Bitbreite und (Über)abtastrate des A//D-Wandlers 24 geeignet ausgelegt werden.

**Patentansprüche**

1.  Verfahren zur Bestimmung einer Signallaufzeit, bei dem zu einem Sendezeitpunkt ein Sendesignal in einen Überwachungsbereich (36, 42) ausgesandt und ein daraufhin reflektiertes Signal aus dem Überwachungsbereich als Eingangssignal *(x(t))* empfangen wird, das nach einer Abtastung (24) in ein digitales Signal umgewandelt und anschließend mit einer effektiven Auflösung digital ausgewertet wird, um einen Empfangszeitpunkt und daraus anhand des Sendezeitpunkts die Signallaufzeit zu bestimmen, wobei zunächst die Abtastung (24) mit einer Abtastrate erfolgt, die zu einem digitalen Rohsignal mit geringerer Auflösung als die effektive Auflösung führt und anschließend das Eingangssignal ($x(t)$) mit der effektiven Auflösung aus dem digitalen Rohsignal auf Basis einer Transformation des Eingangssignals in eine Repräsentation ($\Psi$) rekonstruiert wird, in der das Eingangssignal ($x(t)$) mit der effektiven Auflösung durch die geringere Anzahl an Freiheitsgraden des digitalen Rohsignals in der geringeren Auflösung darstellbar ist, wobei für die Repräsentation ($\Psi$) angenommen wird, dass das Eingangssignal ($x(t)$) dünn besetzt ist oder eine endliche Zahl von Freiheitsgraden (2 $K$) aufweist,
    **dadurch gekennzeichnet,**
    **dass** das Rohsignal vor der Rekonstruktion digital aufbereitet wird, so dass die Eigenschaft des Eingangssignals ($x(t)$), dass es dünn besetzt ist oder eine endliche Anzahl von Freiheitsgraden aufweist, auch unter auf das Eingangssignal ($x(t)$) einwirkenden Störeinflüssen erhalten bleibt.

2.  Verfahren nach Anspruch 1,
    wobei für die Repräsentation ($\Psi$) angenommen wird, dass das Eingangssignal *(x(t))* als Überlagerung einer endlichen Anzahl *(K)* von Pulsen *(p)* dargestellt werden kann, wobei jeder Puls ($p$) durch eine Amplitude ($a_k$) und eine zeitliche Lage ($t_k$) charakterisiert ist.

3.  Verfahren nach Anspruch 1 oder 2,
    wobei für die Rekonstruktion ein Auslöschungsfilter ($h$) bestimmt wird, welches das Eingangssignal ($x(t)$) eliminiert.

4.  Verfahren nach Anspruch 3,
    wobei die Bestimmung des Auslöschungsfilters ($h$) die Auflösung eines linearen Gleichungssystems mit einer Toeplitz-Matrix aufweist, die mit Werten der Fouriertransformierten des Eingangssignals ($x(t)$) besetzt ist.

5.  Verfahren nach Anspruch 3 oder 4,
    wobei für die Bestimmung des Auslöschungsfilters ($h$) bei verrauschtem Eingangssignal ($x(t)$) vor der Auflösung des linearen Gleichungssystems die Toeplitz-Eigenschaft durch eine iterative Optimierung, insbesondere den Cadzow-Algorithmus, wiederhergestellt wird.

6.  Verfahren nach Anspruch 5,
    wobei die iterative Optimierung als Anfangswert die Toeplitz-Matrix mindestens einer früheren Rekonstruktion verwendet.

7.  Verfahren nach einem der vorhergehenden Ansprüche,
    wobei das Eingangssignal ($x(t)$) vor der Abtastung (24) abgeschnitten (50) oder logarithmisch verstärkt wird und/oder vor der Abtastung (24) gezielt verrauscht wird.

8.  Verfahren nach einem der vorhergehenden Ansprüche,
    wobei eine Mehrfachmessung ausgeführt wird, bei der jeweils ein Sendesignal ausgesandt und ein daraufhin reflektiertes Eingangssignal ($x(t)$) aus dem Überwachungsbereich (36, 42) empfangen wird, und wobei durch eine gemeinsame Bewertung aus der dabei durch Abtastung (24) gewonnnen Vielzahl von Rohsignalen das digital aufbereitete Rohsignal gewonnen wird.

9.  Verfahren nach Anspruch 8,
    wobei die Sendesignale mit unterschiedlichen Verzögerungen (54) ausgesandt werden und für die gemeinsame Bewertung eine Scharmittelung unter Berücksichtigung der Verzögerungen (54) durchgeführt wird.

10. Verfahren nach einem der vorhergehenden Ansprüche,
    wobei das Eingangssignal ($x(t)$) vor der Abtastung (24) in einem Filter (22) gefiltert wird, um die Signalform zeitlich zu strecken, insbesondere mittels eines Tiefpassfilters.

**11.** Verfahren nach Anspruch 10,
wobei die Übertragungsfunktion des Filters (22) zur Kalibrierung oder Rekalibrierung vermessen wird.

**12.** Verfahren nach einem der vorhergehenden Ansprüche,
wobei die Abtastrate größer gewählt ist als zur Rekonstruktion des Eingangssignals ($x(t)$) erforderlich.

**13.** Verfahren nach einem der vorhergehenden Ansprüche,
wobei eine Amplitudenablage des Rohsignals vor der Rekonstruktion kompensiert wird, insbesondere indem ein konstanter Teilbereich des Rohsignals gesucht und das Rohsignal um dessen Amplitudenablage korrigiert wird.

**14.** Sensor zur Abstandsmessung, insbesondere optischer Entfernungstaster (200), Laserscanner (300) oder TDR-Füllstandssensor (400) mit einem Sender (14), einem Empfänger (18), einem A/D-Wandler (24) und einer Auswertungseinheit (26) zur Durchführung einer Signallaufzeitmessung und Rekonstruktion des Einfangssignals ($x(t)$) nach einem der vorhergehenden Ansprüche.

## Claims

**1.** A method for the determination of a signal time of flight, wherein a transmission signal is transmitted into a monitoring area (36, 42) at a transmission point in time and a signal reflected thereupon is received from the monitoring area as an input signal ($x(t)$) which is converted into a digital signal following a sampling (24) and is subsequently digitally evaluated in order to determine a reception point in time and from that the signal time of flight based on the transmission point in time, wherein initially the sampling (24) is done with a sampling rate which results in a digital raw signal having a lower resolution than the effective resolution, and subsequently the input signal ($x(t)$) is reconstructed from the digital raw signal with the effective resolution based on a transformation of the input signal in a representation ($\Psi$) in which the input signal ($x(t)$) can be represented with the effective resolution by the lower number of degrees of freedom of the digital raw signal in the lower resolution, wherein it is assumed for the representation ($\Psi$) that the input signal ($x(t)$) is sparse or has a finite number of degrees of freedom ($2K$),
**characterized in that** the raw signal is digitally preprocessed prior to the reconstruction, so that the property of the input signal ($x(t)$) that it is sparse or has a finite number of degrees of freedom is preserved even under interference influencing the input signal ($x(t)$).

**2.** The method according to claim 1,
wherein it is assumed for the representation ($\Psi$) that the input signal ($x(t)$) can be represented as a superposition of a finite number ($K$) of pulses ($p$), wherein each pulse ($p$) is **characterized by** an amplitude ($a_k$) and a time position ($t_k$).

**3.** The method according to claim 1 or 2,
wherein an elimination filter ($h$) eliminating the input signal ($x(t)$) is determined for the reconstruction.

**4.** The method according to claim 3,
wherein the determination of the elimination filter ($h$) includes solving of a linear equation system with a Toeplitz matrix which comprises values of the Fourier transform of the input signal ($x(t)$).

**5.** The method according to claim 3 or 4,
wherein for the determination of the elimination filter ($h$) for an input signal ($x(t)$) with noise the Toeplitz property is recovered prior to solving the linear equation system by an iterative optimization, in particular the Cadzow algorithm.

**6.** The method according to claim 5,
wherein the iterative optimization uses the Toeplitz matrix of at least one earlier reconstruction as an initial value.

**7.** The method according to any of the preceding claims,
wherein the input signal *(x(t))* is cropped (50) or logarithmically amplified prior to the sampling (24) and/or a noise is deliberately added prior to the sampling (24).

**8.** The method according to any of the preceding claims,

wherein a multiple measurement is done, where a respective transmission signal is transmitted and a reflected input signal ($x(t)$) is thereupon received from the monitoring area (36, 42), and wherein by a collective evaluation of the plurality of raw signals generated by sampling (24) the digitally preprocessed raw signal is obtained.

9. The method according to claim 8,
   wherein the transmission signals are transmitted with different delays (54), and an averaging considering the delays (54) is performed for the collective evaluation.

10. The method according to any of the preceding claims,
    wherein the input signal ($x(t)$) is filtered in an analog filter (22) prior to the sampling (24) to stretch the signal shape in time, in particular by means of a low pass filter.

11. The method according to claim 10,
    wherein the transfer function of the filter (22) is measured for calibration or recalibration.

12. The method according to any of the preceding claims,
    wherein the sampling rate is selected larger than necessary for the reconstruction of the input signal ($x(t)$).

13. The method according to any of the preceding claims,
    wherein an amplitude offset of the raw signal is compensated prior to the reconstruction, in particular by looking for a constant part of the raw signal and correcting the raw signal by the constant part's amplitude offset.

14. A sensor for distance determination, in particular optical distance sensor (200), laser scanner (300), or TDR fill level sensor (400), having a transmitter (14), a receiver (18), an A/D converter (24), and an evaluation unit (26) for performing a signal time of flight measurement and reconstruction of the input signal ($x(t)$) according to any of the preceding claims.

**Revendications**

1. Procédé pour la détermination du temps de parcours d'un signal, dans lequel un signal émis est émis un instant d'émission vers une zone de surveillance (36, 42) et un signal réfléchi depuis la zone de surveillance est ensuite reçu à titre de signal entrant (x(t)), qui est converti après un palpage (24) en un signal numérique et est ensuite évalué de manière numérique avec une résolution effective, afin de déterminer un instant de réception et, à partir de celui-ci au moyen de l'instant d'émission, le temps de parcours du signal, dans lequel le palpage (24) a tout d'abord lieu avec une cadence de palpage qui mène à un signal brut numérique avec une plus faible résolution que la résolution effective, et le signal entrant (x(t)) est ensuite reconstruit avec la résolution effective à partir du signal brut numérique sur la base d'une transformation du signal entrant, dans une représentation (Ψ) dans laquelle le signal entrant (x(t)) avec la résolution effective est susceptible d'être représenté par le plus faible nombre de degrés de liberté du signal brut numérique dans la résolution plus faible, dans lequel on suppose pour la représentation (Ψ) que le signal entrant (x(t)) est plus faible ou comporte un nombre fini de degrés de liberté (2K),
   **caractérisé en ce que**
   avant la reconstruction, le signal brut est préparé de manière numérique, de sorte que la propriété du signal entrant (x(t)), c'est-à-dire qu'il est plus faible ou qu'il comporte un nombre fini de degrés de liberté, reste conservée également sous les influences perturbatrices qui agissent sur le signal entrant (x(t)).

2. Procédé selon la revendication 1,
   dans lequel on suppose pour la représentation (Ψ) que le signal entrant (x(t)) peut être représenté comme une superposition d'un nombre fini (K) d'impulsions (p), de sorte que chaque impulsion (p) est **caractérisée par** une amplitude ($a_k$) et une situation temporelle ($t_k$).

3. Procédé selon la revendication 1 ou 2,
   dans lequel on détermine pour la reconstruction un filtre d'extinction (h) qui élimine le signal entrant (x(t)).

4. Procédé selon la revendication 3,
   dans lequel la détermination du filtre d'extinction (h) comprend la résolution d'un système d'équations linéaires avec une matrice de Toeplitz, qui est occupée avec des valeurs de la transformée de Fourier du signal entrant (x(t)).

**5.** Procédé selon la revendication 3 ou 4,
dans lequel pour la détermination du filtre d'extinction (h) lorsque le signal d'entrée (x(t)) est chargé de bruit, avant la résolution du système d'équations linéaires la propriété de Toeplitz est rétablie par une optimisation itérative, en particulier par l'algorithme de Cadzow.

**6.** Procédé selon la revendication 5,
dans lequel l'optimisation itérative est utilisée comme valeur de départ de la matrice de Toeplitz d'au moins une reconstruction antérieure.

**7.** Procédé selon l'une des revendications précédentes,
dans lequel le signal entrant (x(t)) est recoupé (50) ou amplifié de façon logarithmique avant le palpage (24) et/ou et chargé de bruit de manière ciblée avant le palpage (24).

**8.** Procédé selon l'une des revendications précédentes,
dans lequel on exécute une mesure multiple dans laquelle on émet respectivement un signal émis et on reçoit un signal entrant réfléchi (x(t)) ensuite depuis la zone de surveillance (36, 42), et dans lequel on récupère le signal brut préparé par voie numérique, par une évaluation commune, à partir de la pluralité de signaux bruts récupérés ici par palpage (24).

**9.** Procédé selon la revendication 8,
dans lequel les signaux émis sont émis avec des retards différents (54) et pour l'évaluation commune on exécute une moyenne de toutes les valeurs possibles en tenant compte des retards (54).

**10.** Procédé selon l'une des revendications précédentes,
dans lequel le signal entrant (x(t)) est filtré avant le palpage (24) dans un filtre (22) afin d'étirer dans le temps la forme du signal, en particulier au moyen d'un filtre passe-bas.

**11.** Procédé selon la revendication 10,
dans lequel la fonction de transfert du filtre (22) est mesurée pour le calibrage ou pour le recalibrage.

**12.** Procédé selon l'une des revendications précédentes,
dans lequel la cadence de palpage est choisie plus élevée que nécessaire pour la reconstruction du signal entrant (x(t)).

**13.** Procédé selon l'une des revendications précédentes,
dans lequel une diminution d'amplitude du signal brut avant la reconstruction est compensée, en particulier en cherchant une zone partielle constante du signal brut et en corrigeant le signal brut à raison de sa diminution d'amplitude.

**14.** Capteur pour la mesure de distance, en particulier capteur d'éloignement optique (200), scanner à laser (300) ou capteur de niveau de remplissage TDR (400) comprenant un émetteur (14), un récepteur (18), un convertisseur analogique/numérique (24) et une unité d'évaluation (26) pour la mise en oeuvre d'une mesure de temps de parcours d'un signal et de la reconstruction du signal entrant (x(t)) selon l'une des revendications précédentes.

Figur 1

Figur 2

Figur 3

Figur 4

Figur 5

$$x(t) \longrightarrow \boxed{h(t) = \phi(-t/T)} \xrightarrow{y(t)} \underset{T}{\diagup} \longrightarrow y[n]$$

Figur 6

# Figur 7

Originales Eingangssignal und geschaetzte Pulspositionen

Legende:
— Eingangssignal x(t)
—⊙ Geschaetzte Pulsposition nach tk-FRI-Cadzow
—✕ Geschaetzte Pulsposistion nach tk-FRI

t [ns]

Abtastrate von y(t): 8.2e+08 Sps, Aufloesung: 10 Bit

— Ausgang Analogfilter quantiziert
—⊙ Abtastpunkte aus y(t)

t [ns]

Figur 8

E — Algorithmen zur Störunterdrückung; Weiterverarbeitung

D — Rekonstruktion des Originalsignals

C — Verbesserung der abgetasteten Werte

B — Erweiterte Signalerfassung basierend auf Compressive Sensing

A — Filter in Hardware

# Figur 9

Eingangssignal ohne Rauschen und geschaetzte Pulspositionen

Abtastrate von y(t): 2.92e+09 Sps, Aufloesung: 16 Bit, Oversampling: 6

Originalsignal und geschaetztes Signal

## Figur 10

## Figur 11

Result : Pulspositionen im Echosignal ermittelt
Start: Initialisierung der Hardware und Variablen;
**while** *Laufzeitbestimmung eingeschaltet* **do**

    Anzahl der erfassten Echokurven = 0;
    Schalter R öffnen;
    **while** *Anzahl der erfassten Echokurven < 128* **do**
        Verzögerungsglied (Delay) mit zufälligem Wert einstellen;
        Trigger auslösen;
        Folge $c_i[n]$ aufnehmen;
        Anzahl der erfassten Echokurven um 1 inkrementieren;
    **end**
    Schalter R schließen;
    $d[n]$ = Scharmittel der Folgen $c_i[n]$;
    $f[n]$ durch Entfernung des Offsets aus $d[n]$ berechnen, ggf. Nichtlinearitäten kompensieren;
    Pulspositionen und Pulsamplituden aus $f[n]$ schätzen;
    Filterung und Plausibilitätsprüfung der ermittelten Pulspositionen und -amplituden;
    Ausgabe der Pulspositionen und -amplituden;
**end**

# Figur 12

**Data** : Anzahl der angenommen Pulse $K$

**Result** : Pulspositionen im Echosignal ermittelt

Initialisierung der Hardware und Variablen;

**while** *Laufzeitbestimmung eingeschaltet* **do**

Wertefolgen $c[n]$ aufnehmen, Mittelung, Offsetkorrektur;

▷ $(2K + 1)(N_{Mittelung} + 2)$ Operationen

FFT berechnen eines Signals der Länge $2K + 1$;

▷ $(2K + 1) \cdot log_2(2K + 1)$ komplexe Multiplikationen und Additionen

Matrixmultiplikation ;

▷ $(2 * K + 1) \cdot (2 * K + 1)$ Operationen

**while** *(Anzahl der Iterationen < max. Anzahl) && (Fehler > Schwelle)* **do**

Toeplitz-Matrix erstellen durch Kopieren bestimmter Werte des geschätzten Signals in die Matrix A;

▷ Dimension(A) $=(K + 1)$x$(K + 1)$, $(K + 1) \cdot (K + 1)$ Werte;

Singulärwertzerlegung von A;

Neue Matrix A bestimmen: A $=$ U*S*V;

▷ Dimension(U) $=(K + 1)$x$(K + 1)$, Dimension(S) $= (K + 1)$x$(K + 1)$,

▷ Dimension(V) $= (K + 1)$x$(K + 1)$: $2(K + 1)^3$ Operationen

**for** $i = 0 : K$ **do**

Summe bilden;

▷ Im Mittel ca. $4(K + 1)/2$ Operationen

**end**

**end**

Matrix A neu aufbauen;

▷ $(K + 1)^2$ Werte anordnen

Singulärwertzerlegung von A;

▷ $\mathcal{O}((K + 1)^3) + \mathcal{O}(K + 1)$ Operationen,

Wurzeln des Annihilating-Filters bestimmen, Polynom der Ordnung $(K + 1)$;

▷ $O((K + 1)^2)$

Pulsamplituden bestimmen, dazu:

Koeffizienten vorbereiten;

▷ $2(2K + 1)K$ Multiplikationen

Pseudoinverse bestimmen, Matrixmultiplikation;

▷ Dimension $(2K + 1)$x$K$ und $K$x$(2K + 1)$

▷ Dominiert durch Singulaerwertzerlegung

▷ $\mathcal{O}((2K + 1)^3) + \mathcal{O}(K + 1) + (2K + 1)K^2$ Operationen

Pulspositionen und Amplituden ausgeben und weiterverarbeiten;

**end**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8213554 B2
- US 8326580 B2

- EP 1972961 A1

**In der Beschreibung aufgeführte Nicht-Patentliteratur**

- **VETTERLI et al.** Sampling Signals With Finite Rate of Innovation. *IEEE Transactions on Signal Processing,* Juni 2002, vol. 50 (6), 1417-1428
- **HORMATI et al.** Annihilating filter-based decoding in the compressed sensing frameword. *Proceedings of SPIE,* 26. August 2007, vol. 6701, ISSN 0277-768X, 670121-1, 670121-10

- Structured Compressive Sensing: From Theory to Applications. **M. DUARTE et al.** IEEE Transactions on Signal Processing. IEEE Service Center, 01. September 2011, vol. 59, 4053-4085